(19) Europäisches Patentamt / European Patent Office / Office européen des brevets

(11) **EP 4 607 683 A1**

(12) **EUROPEAN PATENT APPLICATION**
published in accordance with Art. 153(4) EPC

(43) Date of publication:
**27.08.2025 Bulletin 2025/35**

(21) Application number: **23943309.7**

(22) Date of filing: **17.11.2023**

(51) International Patent Classification (IPC):
**H01M 50/528** (2021.01)   **H01M 10/0587** (2010.01)

(52) Cooperative Patent Classification (CPC):
Y02E 60/10

(86) International application number:
**PCT/CN2023/132450**

(87) International publication number:
**WO 2025/000831 (02.01.2025 Gazette 2025/01)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **30.06.2023 CN 202310791898**

(71) Applicant: **Contemporary Amperex Technology Co., Limited**
**Ningde, Fujian 352100 (CN)**

(72) Inventors:
• **SU, Huasheng**
  **Ningde, Fujian 352100 (CN)**
• **LI, Quankun**
  **Ningde, Fujian 352100 (CN)**
• **XING, Chengyou**
  **Ningde, Fujian 352100 (CN)**
• **WANG, Peng**
  **Ningde, Fujian 352100 (CN)**
• **JIN, Haizu**
  **Ningde, Fujian 352100 (CN)**

(74) Representative: **Frick, Robert**
**Lorenz Seidler Gossel**
**Rechtsanwälte Patentanwälte**
**Partnerschaft mbB**
**Widenmayerstraße 23**
**80538 München (DE)**

(54) **BATTERY CELL AND MANUFACTURING METHOD THEREFOR, AND BATTERY AND ELECTRIC DEVICE**

(57)    The present application discloses a battery cell and a preparation method thereof, a battery, and an electric device, the battery cell includes a housing, and an adapter and an electrode assembly provided in the housing, the electrode assembly includes a body portion and a tab group, the body portion is a cylindrical structure formed by winding an electrode plate, tabs are led out of at least two turns of the electrode plate from an end face of the body portion, and a plurality of tabs lead out of the electrode plate that are arranged in a radial direction of the body portion form the tab group; and the tab group is bent toward an end of the body portion, the tabs in the tab group are bent to form welding sections and connection sections, and the connection sections are connected between the body portion and the welding sections, and are curved; wherein the welding sections of the plurality of tabs in the tab group are stacked in an axial direction of the body portion and form a welding portion, and the connection sections of the plurality of tabs in the tab group are stacked in a radial direction of the body portion and form a connection portion; and the welding portion can form a dense welding structure welded to the adapter, being capable of increasing a welding quality for the tab and adapter.

FIG. 7

## Description

This application claims the priority of Chinese Patent Application No. 202310791898.8 filed to China Patent Office on June 30, 2023, entitled "Battery Cell and Preparation Method thereof, Battery, and Electric Device", the entire disclosure of which is incorporated herein by reference.

TECHNICAL FIELD

The present application relates to the field of battery preparation technologies, and in particular, to a battery cell and a preparation method thereof, a battery, and an electric device.

BACKGROUND

Energy conservation and emission reduction are key to sustainable development of the automotive industry. In this case, electric vehicles have become an important component of the sustainable development of the automotive industry due to advantages thereof in energy efficiency and environmental protection. For electric vehicles, a battery technology is an important factor for the development thereof. Among which, in a battery cell, a tab led out of an electrode assembly is generally welded to an adapter. However, for the tab and adapter, a poor-welding problem easily occurs, affecting the performance of a battery cell.

The above statement merely provides the background information related to the present application and do not necessarily constitute the prior art.

SUMMARY

The present application aims to provide a battery cell and a preparation method thereof, a battery, and an electric device, being capable of reducing the risk that poor welding occurs for a tab and an adapter, and facilitating to increase the performance of an battery cell.

An embodiment of the present application employs technical solutions below.

In a first aspect, provided is a battery cell including a housing, an adapter, and an electrode assembly, and the housing has a mounting cavity; the electrode assembly is located in the mounting cavity, the electrode assembly includes a body portion and a tab group, the body portion is a cylindrical structure formed by winding an electrode plate, tabs are led out of at least two turns of the electrode plate from an end face of the body portion, and a plurality of tabs lead out of the electrode plate that are arranged in a radial direction of the body portion form the tab group; and the tab group is bent toward an end of the body portion, the tabs in the tab group are bent to form welding sections and connection sections, and the connection sections are connected between the body portion and the welding sections, and are curved; the welding sections of the plurality of tabs in the tab group are stacked in an axial direction of the body portion and form a welding portion, and the connection sections of the plurality of tabs in the tab group are stacked in a radial direction of the body portion and form a connection portion; and the adapter and the welding portion are stacked in the axial direction of the body portion, and the adapter is welded to the welding portion.

In the battery cell of the embodiment of the present application, after winding of the electrode assembly is completed, the tab group led out of the end of the body portion of the electrode assembly are bent, and the tabs in the tab group form the welding sections and connection sections after the bending; and after the tab group is bent, the welding sections of the plurality of tabs in the tab group are stacked in the axial direction of the body portion and form the welding portion, the connection portions of the plurality of tabs in the tab group are stacked in the radial direction of the body portion, and then the adapter is welded onto the welding portion, so as to complete welding of the tabs to the adapter; and in this process, after the tabs are bent, the welding sections of the plurality of tabs in the tab group can be smoothly stacked together to form a tight welding portion, thereby reducing the problem of poor welding that occurs for the welding portion and the adapter to facilitate to increase the performance of the battery cell.

In an embodiment, a length of the connection section is $L_1$, and a radius of a corresponding turn, connected to the connection section, of the electrode plate is R, wherein

$$\frac{L_1}{R} \leq 3.14.$$

By adopting the technical solution of the embodiment, radians of tabs correspondingly leading out of different-radii turns of the electrode plate may be not too large via control, thereby promoting furling and bending of tabs; and further, furling and bending of tabs apply small force to the body portion to reduce risks of tab cracking, and active material disengaging, etc., facilitating to increase the yield and performance of the battery cell.

In an embodiment,

$$\frac{L_1}{R} \leq 1.57.$$

By adopting the technical solution of the embodiment, tabs led out of turns, corresponding to different radii, of the electrode plate have relatively small radians, so that furling and bending of tabs are simpler and more labor-saving, and, furling and bending of tabs apply small pulling force to the body portion, which can effectively reduce risks of connection portion cracking, and active material disengaging, etc., to effectively increase the yield and performance of the battery cell.

In an embodiment, a length $L_1$ of a connection section in at least one of the tabs is less than that of a welding section.

By adopting the technical solution of the embodiment, the length of the connection sections is shorter than that of the welding sections, and furling and bending of tabs are simpler and quicker, facilitating the furling and bending of the tabs.

In an embodiment, the tab group is provided with a pre-welding structure for connecting a plurality of tabs in a tab group.

By adopting the technical solution of the embodiment, before the tab group is bent, the plurality of tabs in the tab group are pre-welded together to form a whole, thereby reducing a risk of a loose tab group; and further, after the tab group is bent, the plurality of tabs in the tab group more closely abut against each other to form a more compact welding portion, facilitating to increase a welding quality for the tabs and the adapter and to increase the performance of the battery cell.

In an embodiment, a pre-welding structure is provided at the welding portion.

By adopting the technical solution of the embodiment, the pre-welding structure can enable that the plurality of welding sections in the tab group are welded together, the welding portion is not easily loose after the tab group is bent, and a compact welding portion can be formed after the tab is bent, so that welding between a tab and an adapter has a better quality, enabling better performance of the battery cell; and further, the pre-welding structure does not restrict the connection section, so that the connection section can relatively move when the tab group is bent to promote bending of tabs.

In an embodiment, a spacing between the pre-welding structure and the connection portion is $L_2$, wherein $0.1mm \leq L_2 \leq 10mm$:

By adopting the technical solution of the embodiment, a distance between the pre-welding structure and the connection portion is suitable, facilitating to bend the tab group, and also enabling that the pre-welding structure can allow stable welding the plurality of welding sections in the tab group together, so that the welding portion is not easily unfurled to form a compact welding portion, so that welding between a tab and an adapter has a better quality, enabling better performance of the battery cell.

In an embodiment, $0.5mm \leq L_2 \leq 10mm$.

By adopting the technical solution of the embodiment, the distance between the pre-welding structure and the connection section is designed more suitably, and a risk of pulling a joint of the tab and the body portion due to bending of the tab can be reduced, so that the tab group can be smoothly bent.

In an embodiment, the pre-welding structure is located at an end of the welding portion facing away from the connection sections.

By employing the technical solution of the embodiment, before the tab group is bent, the ends, away from the connection sections, of the welding sections in the tab group are welded together, enabling a simple, convenient welding operation; and further, when the tabs are bent, portions, close to the connection sections, of the welding sections may also move along with bending, so that an operation of bending the tab group can be more time- and labor-saving.

In an embodiment, a length of the welding portion is $L_3$, and a length of the pre-welding structure is $L_4$ in a longitudinal direction of the welding portion, wherein

$$0.2 \leq \frac{L_4}{L_3} < 1 \; .$$

By adopting the technical solution of the embodiment, the ratio of the length $L_4$ of the pre-welding structure to the length $L_3$ of the welding portion is within the above range, so that the plurality of welding sections in the tab group are reliably welded together by the pre-welding structure, reducing the risk that the welding portion is easily loosened with a too short length $L_4$ of the pre-welding structure, and also being capable of reducing a tab formed by welding with a too long length $L_4$ of the pre-welding structure.

In an embodiment, a total number of turns of the electrode plate is $N_1$, and a total number of turns of the electrode plate to which the tab is connected is $N_2$,

wherein $0.1 \leq \frac{N_2}{N_1} \leq 0.9$ .

By adopting the technical solution of the embodiment, the ratio of the total number of turns of the tab led out of the electrode plate to the total number of turns of the electrode plate is within the above range, so that more tabs can be led out of the electrode assembly, thereby reducing internal resistance of the electrode assembly during charging and discharging. If a small number of tabs are led out of the electrode assembly, the internal resistance of the electrode assembly is large during charge, which is not benefit to rapid charging and discharging of a battery cell; and if a too large number of tabs in a tab group are led out of the electrode assembly, the tab group is not easily bent.

In an embodiment, $0.3 \leq \frac{N_2}{N_1} \leq 0.7$ .

By adopting the technical solution of the embodiment, the ratio of the total number of turns of the tab led out of the electrode plate to the total number of turns of the electrode plate is more suitable, and the number of the tab is suitable, facilitating both rapid charging and discharging of the battery cell and bending of the tab group.

In an embodiment, tabs are led out of the electrode plate from an end surface of the body portion at intervals and form the plurality of tab groups, and the connection portions of the plurality of tab groups are provided at intervals in the radial direction of the body portion.

By adopting the technical solution of the embodiment, the number of tabs led out of the electrode assembly can be reduced to promote bending of the tabs; and the number of tab groups is plural, the number of tabs in a single tab group is small, and bending of the tab group is more easily, so that an operation of bending the tab group is also more time- and labor-saving by such a mode to bend the tab group in a grouping mode.

In an embodiment, the number of the tabs, in the tab group, close to an inner turn of the electrode plate is $N_3$, and the number of the tabs, in the tab group, close to an outer turn of the electrode plate is $N_4$, where $N_3 > N_4$.

By adopting the technical solution of the embodiment, bending of the tab group is convenient; further, a current flowing area of the tab group close to the outer turn of the electrode plate is not much different from that of the tab group close to the inner turn of the electrode plate, facilitating better charging and discharging of the battery cell; and in the case that the current flowing area of the tab group close to the outer turn of the electrode plate is identical to that of the tab group close to the inner turn of the electrode plate, it is not the case that the tabs in the tab group close to the inner turn cannot be bent since they are designed to be too wide.

In an embodiment, the number of the tabs in the plurality of tab groups gradually decreases in a first direction which is a direction in which the inner turn of the electrode plate points to the outer turn of the electrode plate.

By employing the technical solution of the embodiment, a tab group having a smaller tab width has more number of tabs, a tab group having a larger tab width has less number of tabs, the tab group is easily bent; and further, the number of the tabs led out of the electrode assembly is larger, facilitating faster charging and discharging of the battery cell.

In an embodiment, a spacing between connection portions of two adjacent tab groups close to the inner turn of the electrode plate is $L_5$, and a spacing between connection portions of two adjacent tab groups close to an outer turn of the electrode plate is $L_6$, where $L_6 > L_5$.

By adopting the technical solution of the embodiment, the number of the tab groups close to the inner turn of the tab is large, the number of the tab groups close to the outer turn of the tab is small, the tab close to the inner turn of the electrode plate has a small width, and the tab close to the outer turn of the electrode plate has a large width, so that the electrode assembly has a current flowing area close to the outer turn of the electrode plate that is not much different from that close to the inner turn of the electrode plate, facilitating better charging and discharging of the battery cell; and in the case that the electrode assembly has the current flowing area close to the outer turn of the electrode plate identical to that of the tab group close to the inner turn of the electrode plate, it is not the case that the tabs in the tab group close to the inner turn cannot be bent since they are designed to be too wide.

In an embodiment, a spacing between connection portions of two adjacent tab groups gradually decreases in a first direction which is a direction in which an inner turn of the electrode plate points to an outer turn of the electrode plate.

By adopting the technical solution of the embodiment, the closer the tab groups get to the inner turn of the electrode plate, the larger the number of the tab groups is, and the closer the tab groups get to the outer turn of the electrode plate, the smaller the number of the tab groups is, so that the current flowing area close to the inner turn of the electrode plate is less different from that close to the outer turn of the electrode plate, facilitating to increase the performance of the battery cell.

In an embodiment, the electrode assembly includes the plurality of tab groups provided at intervals in a circumferential direction of the body portion.

By adopting the technical solution of the embodiment, the tab groups are distributed in a scattering way, and a less number of tabs can be provided in a single tab group, promoting bending of the tab group.

In an embodiment, at least one of the welding section and the connection section is provided with an openwork structure.

By adopting the technical solution of the embodiment, the design of the openwork structure can reduce the structural strength of the tab, thereby promoting bending of the tab.

In an embodiment, in the case that the welding section is provided with the openwork structure, the welding section includes a plurality of welding segments connected to the connection section, the plurality of welding segments are arranged at intervals along a length direction of the connection section, and a gap between two adjacent welding segments forms the openwork structure; and in the case that the connection section is provided with the openwork structure, the connection section includes a plurality of connection segments connected to the welding section, the plurality of connection segments are arranged at intervals in a circumferential direction of the body portion, and a gap between two adjacent connection segments forms the openwork structure.

By adopting the technical solution of the embodiment, the position of the openwork structure can be flexibly set to meet different use requirements.

In an embodiment, in the case that both the welding section and the connection section are provided with the openwork structure, the plurality of welding segments and the plurality of connection segments are connected in a one-to-one corresponding way.

By adopting the technical solution of the embodiment, the tab is divided to have a disrupted structure with multi stages, the tab is easily bent, and the process of bending the tab is also more time- and labor-saving.

In an embodiment, an end of the welding portion facing away from the connection portion is located at a side of the connection portion facing the inner turn of the tab; or an end of the welding portion facing away from the connection portion is located at a side of the connection portion facing away from the inner turn of the tab.

By adopting the technical solution of the embodiment, a direction for bending a tab can be flexibly set, so that different use requirements can be satisfied.

In an embodiment, the welding portion is located between the body portion and the adapter.

By adopting the technical solution of the embodiment, after the tab is bent, welding can be made by simply placing the adapter onto the welding portion, with an easy assembling operation.

In an embodiment, the battery cell further includes a connector welded between the welding portion and the adapter; and/or the welding portion is welded between the connector and the adapter.

By adopting the technical solution of the embodiment, the provision of the connector may increase a welding thickness to reduce a risk of damage to the body portion due to welded perforation, increasing a welding quality for the welding portion and the adapter.

In an embodiment, a thickness of the welding portion is $H_1$, a thickness of the connector is $H_2$, a number of the connectors is N, and a thickness of a welding position of the adapter and the welding portion is $H_3$, wherein $\dfrac{H_1 + N \times H_2}{H_3} \geq 1$ .

By adopting the technical solution of the embodiment, by the design of $\dfrac{H_1 + N \times H_2}{H_3} \geq 1$, the sum of the thicknesses of the welding portion and all the connectors is greater than or equal to the thickness H3 of the welding position of the adapter with the welding portion, so that the sum of the thicknesses of the welding portion and all the connectors is larger than the thickness of the welding position of the welding portion, and the welding portion and the connectors are not easily subjected to welded perforation, and in this way, damage to the body portion can be reduced to increase welding quality and the yield of the battery cell.

In an embodiment, in a case that the connector is welded between the welding portion and the adapter, the thickness H1 of the welding portion is larger than the thickness H2 of the connector.

By adopting the technical solution of the embodiment, when the welding portion is welded to the adapter, since the connector is located between the welding portion and the adapter, welding is performed from the connector to the welding portion during welding, and the thickness H1 of the welding portion is larger than the thickness H2 of the connector, so that the welding portion is not easily subjected to welded perforation to reduce a risk of damage to the body portion, facilitating to increase a welding quality and the yield of the battery cell.

In an embodiment, a thickness of the connector is $H_2$, wherein $0.2\,\text{mm} \leq H_2 \leq 0.4\,\text{mm}$.

By adopting the technical solution of the embodiment, with the thickness $H_2$ of the connector set within a range of 0.2 mm ~ 0.4 mm, the thickness $H_2$ of the connector is set appropriately, on one hand, being capable of reducing a risk of damage to the body portion due to welded perforation of the welding portion, and, on the other hand, enabling the connector that also does not occupy too much space, so as to facilitate to increase the volume energy density of the battery cell; by such a design, the thickness $H_2$ of the connector does not easily cause welded perforation of the welding portion even if the thickness is designed to be too small; and the thickness $H_2$ of the connector does not occupy relatively much space of the battery cell even if the thickness is designed to be too large.

In an embodiment, the adapter is located between the welding portion and the body portion.

By adopting the technical solution of the embodiment, the adapter is located between the welding portion and the body portion, so that welding is performed from the welding portion to the adapter during welding, and the adapter has a structural strength generally superior to that of the welding portion, so that the adapter is not easily subjected to welded perforation, thereby reducing a risk of damage to the body portion to facilitate to increase a welding quality and the yield of the battery cell.

In an embodiment, the adapter is provided with a penetrating hole into which the connection portion is penetrated.

By adopting the technical solution of the embodiment, after the tab group penetrates through the penetrating hole and is bent, the welding portion is located at the side of the adapter facing away from the body portion, and the penetrating hole provides penetrating space for the tab group, enabling a simple structure which is easy to manufacture.

In an embodiment, the connection portion is located at a side of the adapter close to the outer turn of the electrode plate in a case that an end of the welding portion facing away from the connection portion is located at a side of the connection portion close to the inner turn of the tab.

By adopting the technical solution of the embodiment, the tab group directly passes through the side of the adapter close to the outer turn of the electrode plate and then bends, so that the welding portion can be located at the side of the adapter facing away from the body portion, without a penetrating structure provided in the adapter to facilitate manufacturing.

In an embodiment, a side of the adapter close to the outer turn of the electrode plate is provided with a notch within which the connection portion is located.

By adopting the technical solution of the embodiment, the notch can provide installation space for the connection portion, so that the connection portion does not easily protrude out of the outer peripheral wall of the body portion, a certain distance can also be kept between the connection portion and the wall of the installation cavity, a risk of pressing the connection portion and housing can be reduced, facilitating to increase use reliability of the battery cell, and overall structure compactness is excellent, facilitating to increase the energy density of the battery cell.

In an embodiment, the battery cell includes a plurality of tab groups, the welding portions of a part of the tab groups are located between the body portion and the adapter, and the welding portions of the other part of the tab group are located at a side of the adapter facing away from the body portion.

By adopting the technical solution of the embodiment, the tabs of the electrode assembly are divided into a plurality of tab groups, so that the number of tabs in each tab group can be designed to be small to facilitate bending; and further, positions of welding portions of tab groups can be flexibly set, thereby facilitating assembly.

In an embodiment, the adapter includes a reversing portion and a fixing portion connected to each other, and the reversing portion is welded to the welding portion, and can be reversed with respect to the fixing portion.

By adopting the design solution of the embodiment, a welding direction of a welding laser may be changed, thereby reducing a risk of damage to the body portion because the welding laser is not projected to the body portion even with welded perforation of the welding portion by the laser, to increase the performance of the battery cell. According to a second aspect, a method for preparing a battery cell is provided, for preparing the battery cell in the embodiment as described above, the method including the following steps:

bending the tab group of the electrode assembly towards the end of the body portion of the electrode assembly, wherein the body portion is a cylindrical structure formed by winding an electrode plate, tabs are led out of at least two turns of the electrode plate from an end face of the body portion, and a plurality of tabs lead out of the electrode plate that are arranged in a radial direction of the body portion form the tab group; the tabs in the tab group are bent to form the welding sections and the connection sections, the welding sections of the plurality of tabs are stacked in the axial direction of the body portion and form a welding portion, and the connection sections of the plurality of tabs are stacked in the radial direction of the body portion and form the connection portion,

welding the adapter to the welding portion, the adapter and the welding portion being stacked in the axial direction of the body portion; and

enclosing the adapter and the electrode assembly into the mounting cavity of the housing after welding is completed.

In the method for preparing a battery cell according to the embodiment of the present application, after the tab group is bent to form the welding portion and the connection portion, the welding portion and the adapter are welded together, and finally the electrode assembly and the adapter after welding is completed are enclosed in the mounting cavity of the housing; and in this process, the welding portion formed after the tab group is bent and the welding sections within the welding portion can smoothly and closely abut against each other to form a tight welding portion, thereby reducing the problem that poor welding occurs for the welding portion and adapter, to facilitate to increase the performance of the battery cell.

In an embodiment, the tab group is furled in a stacking direction of the welding section before the tab group is bent.

By adopting the technical solution of the embodiment, pressing and furling can enable welding sections obtained by bending can more closely abut against each other to form a more tight welding portion, reducing risks of welding defects such as insufficient welding, welded perforation, etc., and further facilitating to increase a welding quality for the adapter and tab.

In an embodiment, after the tabs are furled and before the tabs are bent, the tab group is pre-welded, so that the tabs in the tab group are welded together.

By adopting the technical solution of the embodiment, after the tabs are furled and before the tabs are bent, the tabs in the tab group are welded together by pre-welding, so that a risk of a loosen tab during subsequent bending can be reduced, and the welding sections in the welding portion then can abut against each other to form a tight welding portion, reducing risks of poor welding such as insufficient welding, welded perforation, etc., to facilitate to increase the welding quality for the welding portion and adapter.

In an embodiment, the pre-welded tab group faces away from the end of the body portion.

By adopting the technical solution of the embodiment, pre-welding is performed at the end of the tab group facing away from the body portion, and the end of the tab group close to the body portion is in a free state after welding is completed, promoting bending of the tab group.

In a third aspect, provided is a battery including the battery cell in the embodiment as described above, and/or a battery cell obtained by using the method for preparing a battery cell in the embodiment as described above.

A third aspect provides an electric device, including the battery in the embodiments as described above.

The above description is merely an overview of the technical solutions of the present application. For a clearer understanding of the technical means of the present application, the present application can be carried out in accordance with the content of the description, and in order to make the above and other objectives, characteristics, and advantages of the present application apparent and comprehensible, specific embodiments of the present application are described below.

DESCRIPTION OF DRAWINGS

To describe technical solutions in embodiments of this application more clearly, the following briefly describes the accompanying drawings for describing the embodiments or the conventional technology. It is clear that the accompanying drawings described in the following are merely embodiments of this application. Those of ordinary skill in the art can still derive other figures from the these figures without creative efforts.

FIG. 1 is a schematic structural diagram of a vehicle provided by an embodiment of the present application.

FIG. 2 is a schematic structural diagram of a battery provided by an embodiment of the present application;

FIG. 3 is a sectional view of a battery cell provided by an embodiment of the present application.

FIG. 4 is an exploded schematic diagram of a battery cell provided by an embodiment of the present application.

FIG. 5 is a schematic structural diagram of the battery cell shown in FIG. 4.

FIG. 6 is a cross-sectional view along line A-A in FIG. 5.

FIG. 7 is a partially enlarged view of B in FIG. 6.

FIG. 8 is a partially enlarged view of C in FIG. 7.

FIG. 9 is a preparation flow diagram of a battery cell provided by an embodiment of the present application.

FIG. 10 is a partially enlarged view of D in FIG. 9.

FIG. 11 is a schematic structural diagram with one viewpoint of an electrode assembly of a battery cell provided by another embodiment of the present application.

FIG. 12 is a schematic structural diagram with another viewpoint of the electrode assembly shown in FIG. 11.

FIG. 13 is a schematic structural diagram with one viewpoint of an electrode assembly of a battery cell provided by another embodiment of the present application.

FIG. 14 is a schematic structural diagram with another viewpoint of the electrode assembly shown in FIG. 13.

FIG. 15 is a schematic structural diagram of an electrode assembly of a battery cell provided by still another embodiment of the present application.

FIG. 16 is a partially enlarged view of a section of a battery cell provided by another embodiment of the present application.

FIG. 17 is a sectional view of a battery cell provided by still an embodiment of the present application.

FIG. 18 is a partially enlarged view of E in FIG. 17.

FIG. 19 is a sectional view of a battery cell provided by still an embodiment of the present application.

FIG. 20 is a partially enlarged view of F in FIG. 19.

FIG. 21 is a schematic structural view of an end cap and an adapter of the battery cell shown in FIG. 17.

FIG. 22 is a partially enlarged view of a section of a battery cell provided by still another embodiment of the present application.

FIG. 23 is a partially enlarged view of a section of a battery cell provided by still another embodiment of the present application.

FIG. 24 is a partially enlarged view of a section of a battery cell provided by still another embodiment of the present application.

FIG. 25 is a schematic structural diagram of an end cap and an adapter of a battery cell provided by still another embodiment of the present application.

In which, reference signs in the figures: 1000, vehicle; 1100, battery; 1200, controller; 1300, motor; 10, box; 20, battery cell; 210, housing; 211, case; 212, end cap; 2121, electrode terminal; 2111, mounting cavity; 220, electrode assembly; 221, body portion; 222, tab group; 2221, welding portion; 2222, connection portion; 2223, spacing gap; 223, electrode plate; 2231, first electrode plate; 2232, second electrode plate; 224, tab; 2241, welding section; 2242, welding segment; 2243, connection section; 2244, connection segment; 2245, openwork structure; 225, pre-welding structure; 226, separator; 230, adapter; 231, penetrating hole; 232, notch; 233, reversing portion; 234, fixing portion; 235, connection structure; 240, connector; 250, binding layer.

DESCRIPTION OF EMBODIMENTS

In order to make the technical problem to be solved, technical solution and beneficial effect of the present application clearer, the present application will be further described in detail below with reference to the figures and embodiments. It should be understood that the specific embodiments described herein are only used to explain the present application and are not used to limit the present application.

Unless defined otherwise, all technical and scientific terms used herein have the same meaning as commonly understood by a person skilled in the art to which the present application belongs; the terms used herein are used for describing particular embodiments only and are not intended to limit the present application; and the terms "comprising", "including", and "having" and any variations thereof in the description, claims and the above drawings of the present application are intended to cover non-exclusive inclusion.

In the description of the embodiments of the present application, the technical terms "first", "second", and the like are used only for distinguishing between different objects, but cannot be construed to indicate or imply relative importance or implicitly indicate the number, specific order, or primary/secondary relationship of indicated technical features. Thus, a feature defined by "first" and "second" may explicitly or implicitly indicates that the feature is singular or plural.

Reference to "an embodiment" herein means that a particular feature, structure, or characteristic described with reference to the embodiment can be included in at least one embodiment of the present application. The phrase in various places in the description does not necessarily all refer to the same embodiment, or a separate or alternative embodiment mutually exclusive of other embodiments. It is explicitly and implicitly understood by those skilled in the art that the embodiments described herein may be combined with other embodiments in any suitable manner.

In the description of the embodiments of the present application, the term "and/or" merely describes an association relationship of associated objects, indicating that three relationships may exist, for example, A and/or B may mean that A exists alone, A and B exist simultaneously, or B exists alone. In addition, the character "/" herein generally indicates that associated objects are in a "or" relationship.

In the description of the embodiments of the present application, the term "a plurality of" means two or more (including two), and similarly, the term "a plurality of groups" means two or more groups (including two groups), and the term "a plurality of pieces" means two or more pieces (including two pieces). "Several" means one or more unless specifically defined otherwise.

In the description of the embodiments of the present application, orientations or positional relationships indicated by the technical terms such as "center", "longitudinal", "transverse", "length", "width", "thickness", "upper", "lower", "front", "rear", "left", "right", "vertical", "horizontal", "top", "bottom", "inner", "outer", "clockwise", "counterclockwise", "axial", "radial", "circumferential", and the like are based on orientations or positional relationships shown in the drawings, and are merely for convenience of description of the embodiments of the present application and simplified description, and do not indicate or imply that an indicated apparatus or element must have a specific orientation or be configured and operated in a specific orientation, and thus should not be construed as limitations on the embodiments of the present application.

In the description of the embodiments of the present application, unless explicitly specified and defined otherwise, the terms "mount", "couple", "connect", and "fasten" should be broadly understood, for example, they may be a fixed connection, a detachable connection, or being integrated; or may be a mechanical connection, or an electrical connection; or may be a direct connection, or an indirect connection via an intermediate medium, or an internal communication between two elements or interaction between two elements. A person of ordinary skill in the art may understand the specific meanings of the above terms in the embodiments of the present application according to specific situations.

In the description of the embodiment of the present application, unless explicitly specified and defined otherwise, when an element is referred to as being "fixed on" or "disposed on" another element, it may be directly or indirectly on another element. When an element is referred to as being "connected to" another element, it can be directly or indirectly connected to another element.

Energy conservation and emission reduction are key to sustainable development of the automotive industry. In this case, electric vehicles have become an important component of the sustainable development of the automotive industry due to advantages thereof in energy efficiency and environmental protection. For electric vehicles, a battery technology is an important factor for the development thereof.

A battery cell refers to a minimum unit constituting a battery, and has a housing within which an electrode assembly is provided, the electrode assembly being a cylindrical structure formed by winding a positive electrode plate, a negative electrode plate, and a separator which are stacked. Charging and discharging is performed by the electrode assembly, mainly relying on movement of active ions (e.g., lithium ions) between the positive electrode plate and the negative electrode plate. The positive electrode plate includes a positive current collector and a plurality of positive tabs led out from an edge of the collector, wherein the positive current collector and positive tab may be obtained by die cutting, or an electric conductor is welded to an edge of the positive current collector to obtain a positive tab; the positive current collector is generally covered by a positive electrode active material, and the positive tab is not covered by a positive electrode active material; and taking a lithium-ion battery as an example, the material for the positive current collector may be aluminum, and the positive electrode active material may be lithium cobalt oxide, lithium iron phosphate, ternary lithium, lithium manganate, etc. The negative electrode plate includes a negative current collector and a plurality of negative tabs led out from an edge of the collector, wherein the negative current collector and negative tab may be obtained by die cutting, or an electric conductor is welded to an edge of the negative current collector to obtain a negative tab; the negative current collector is generally covered by a negative electrode active material, and the negative tab is not covered by a negative electrode active material; and the material for the negative current collector may be copper, and the negative electrode active material may be carbon or silicon or the like. The separator may be made of polypropylene (PP for short), polyethylene (PE for short), or the like. The separator is an insulating film provided between the positive electrode plate and the negative electrode plate, and has main functions of separating the positive electrode and negative electrode and preventing electrons in a battery not to freely pass therethrough to prevent a short circuit, but allowing ions in an electrolyte to freely pass therethrough to form a circuit between the positive electrode and negative electrode.

As a battery cell is manufactured, in some cases, stacking is performed in the order of positive electrode plate-separator-negative electrode plate-separator, and then winding is made for preparation; after winding, the positive current collector, negative current collector and separator form a main body part of an electrode assembly, i.e., a body portion; the positive tab is led out in an axial direction of the body portion and protrudes out of an end of the body portion, and a plurality of positive tabs are stacked in a radial direction of the electrode assembly to form a positive tab group; and the negative tab is led out in an axial direction of the body portion and protrudes out of an end of the body portion, and a plurality of negative tabs are stacked in a radial direction of the electrode assembly to form a negative tab group. The housing is generally provided with an electrode terminal and an adapter, the adapter is connected to the electrode terminal after the adapter is welded to the positive tab group and the negative tab group, and in this way, current input and output can be realized by the electrode terminal. As may be understood, the adapter includes a positive adapter and a negative adapter, the electrode terminal includes a positive electrode terminal and a negative electrode terminal, the positive adapter connects the positive tab group to the positive electrode terminal, and the negative adapter connects the negative electrode terminal to the negative tab group. For the ease of description, the positive electrode plate and negative electrode plate may be collectively referred to as a electrode plate, the positive tab and negative tab may be collectively referred to as a tab, the positive adapter and negative adapter may be collectively referred to as an adapter, and the positive electrode terminal and negative electrode terminal may be collectively referred to as an electrode terminal.

In a process for preparing an battery cell, a wound tab generally is arc-shaped, and the arc-shaped tab is subjected to a flattening process and then is welded to the adapter; however, a flattened tab is likely to have accumulated wrinkles and has a root portion, close to an outer turn, that is likely to extend outward, and thus tabs easily have a gap therebetween or are subjected to loose abutting, that is, a compactness degree of a tab via flattening is not sufficient, so that defects such as insufficient welding, welded perforation, etc. are likely to occur when the adapter is welded to the tab, affecting the performance of a battery cell.

To improve a poor welding problem for the adapter and tab, the embodiment of the present application provides a battery cell, a tab group led out from an end of a body portion is bent towards the end of the body portion after winding of an electrode plate is completed, tabs in the tab group are bent to form welding sections and connection sections, welding sections of a plurality of tabs are stacked in the axial direction of the body portion and form a welding portion, and connection sections of a plurality of tabs are stacked in the radial direction of the body portion and form a connection portion, and the welding portion and the adapter are stacked with and welded together, and finally enclosed in a mounting cavity of a housing, thus completing preparation of the battery cell; and in this process, after the tab group is bent, welding sections of a plurality of tabs in the tab group can be smoothly stacked together to form a tight welding portion, thereby reducing the problem of poor welding that occurs for the welding portion and the adapter to facilitate to increase the performance of the battery cell.

The embodiment of the present application discloses a battery cell, a battery, an electric device using the battery as a power source. The electric device may be, but is not limited to, a mobile phone, a tablet computer, a notebook computer, an electric toy, an electric tool, a battery-powered vehicle, an electric vehicle, a ship, a spacecraft, etc. The electric toy may include a stationary or mobile electric toy, such as a game machine, an electric car toy, an electric ship toy, an electric airplane toy, and the like, and the spacecraft may be an airplane, a rocket, a space shuttle, a spaceship, etc.

To facilitate description, in the following embodiments, as an example for description, an electric device in an embodiment of the present application is a vehicle 1000.

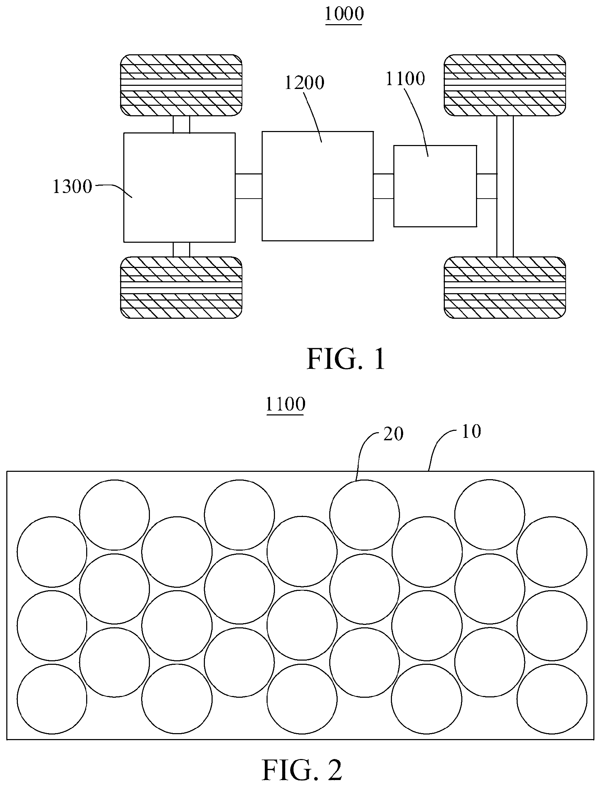

Referring to FIG. 1, FIG. 1 is a schematic structural diagram of a vehicle 1000 provided by an embodiment of the present application. The vehicle 1000 may be a fuel vehicle, a gas vehicle, or a new energy vehicle, and the new energy vehicle may be a battery electric vehicle, a hybrid vehicle, or a range-extended electric vehicle. Inside the vehicle 1000, a battery 1100 is provided, which may be provided at the bottom, head, or tail of the vehicle 1000. The battery 1100 may be used to power the vehicle 1000, for example, the battery 1100 may be used as an operating power source of the vehicle 1000. The vehicle 1000 may further include a controller 1200 and a motor 1300, and the controller 1200 is used to control the battery 1100 to power the motor 1300, for example, for a working power requirement for the vehicle 1000 during starting, navigating, and driving the vehicle 1000.

In an embodiment of the present application, the battery 1100 may be used not only as the operating power source of the vehicle 1000, but also as a driving power source of the vehicle 1000, instead of or partially instead of fuel or natural gas to provide driving power for the vehicle 1000.

Referring to FIG. 2, as an embodiment of the battery 1100, the battery 1100 includes a box 10 and a battery cell 20. The battery cell 20 is accommodated in the box 10. Here, the box 10 is used for providing an accommodation space for the battery cell 20, and the box 10 may have various structures. In an embodiment, the box 10 may include a first part and a second part, and the first part and the second part fit to each other to define an accommodation space for accommodating the battery cell 20. The second part may be a hollow structure with an opening at one end, the first part may be a plate-shaped structure, and the first part covers an opening side of the second part, so that the first part and the second part jointly define the accommodation space. The first part and the second part each may be a hollow structure with an opening at one end, and an opening side of the first part covers an opening side of the second part. Of course, the box 10 formed by the first part and the second part may be in various shapes such as cylinder, cuboid, and the like.

In the battery 1100, a plurality of battery cells 20 may be provided, and the plurality of battery cells 20 may be subjected to series connection, parallel connection, or series-parallel connection. The series-parallel connection means that the plurality of battery cells 20 are subjected to both series connection and parallel connection.

In an embodiment, the plurality of battery cells 20 may be subjected to series connection, parallel connection, or series-parallel connection directly, and then an integration formed by the plurality of battery cells 20 is accommodated in the box 10. Certainly, the battery 1100 may be alternatively a battery module formed by integrating the plurality of battery cells 20 by series connection, parallel connection, or series-parallel connection, and then a plurality of battery modules are integrated by series connection, parallel connection, or series-parallel connection, and accommodated in the box 10. The battery 1100 may further include other structures. For example, the battery 1100 may further include a current converging component for implementing an electrical connection between the plurality of battery cells 20.

Here, each battery cell 20 may be a secondary battery or a primary battery, or may be a lithium-sulfur battery, a sodium-ion battery, or a magnesium-ion battery, but is not limited thereto. The battery cell 20 may be in the shape of cylinder, flat body, rectangular cuboid, etc.

As another embodiment of the battery 1100, the battery 1100 may not include the box 10, but a plurality of battery cells 20 are electrically connected and, after being integrated by a necessary fixing structure, assembled into an electric device.

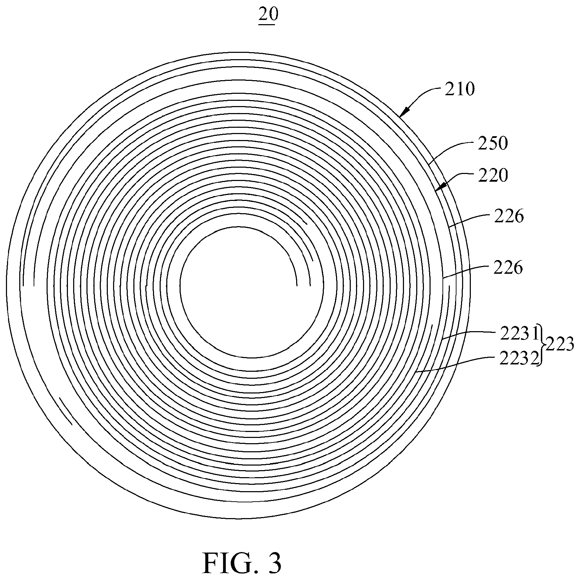

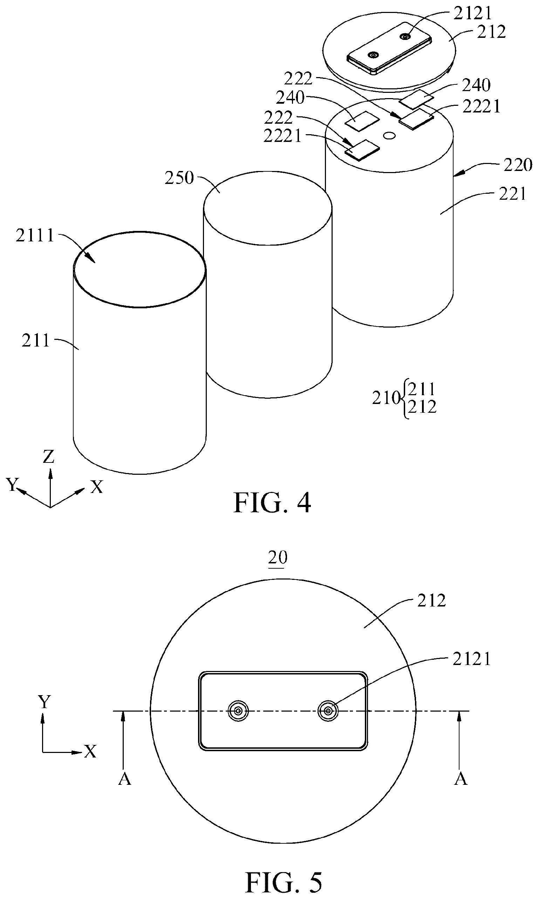

Referring to FIG. 3 and FIG. 4, FIG. 3 is a sectional view of a battery cell 20 provided by an embodiment of the present application, and FIG. 4 is an exploded schematic structural diagram of a battery cell 20 provided by an embodiment of the present application. The battery cell 20 refers to a minimum unit constituting a battery. As shown in FIG. 3, the battery cell 20 includes a housing 210, an electrode assembly 220, a binding layer 250, and other functional components. The housing 210 refers to a component for isolating the internal environment of the battery cell 20 from the external environment, and the housing 210 forms, via surrounding, a mounting cavity 2111, and the mounting cavity 2111 is used to provide mounting space for components such as the electrode assembly 220, the binding layer 250, etc.; and exemplarily, as shown in FIG. 4, the housing 210 includes a case 211 and an end cap 212.

The end cap 212 is a component that covers the opening of the case 211 and form the mounting cavity 2111 via surrounding along with the case 211 to insulate an internal environment of the battery cell 20 from an external environment. Without limitation, the shape of the end cap 212 may adapt to the shape of the case 211 to fit the case 211. In an embodiment, the end cap 212 may be made of a material with certain hardness and strength (e.g., aluminum alloy). As such, the end cap 212 is less prone to deformation under compressive impact, thereby enabling the battery cell 20 to have higher structural strength and improved safety performance. The end cap 212 may be provided with functional components such as an electrode terminal 2121, an adapter 230, etc., the adapter 230 is located in the mounting cavity 2111 and used to electrically connect the electrode terminal 2121 and the electrode assembly 220, and the electrode terminal 2121 is exposed from the outside of the end cap 212 and is used for electrical connection with an external electric apparatus, so as to output or input electric power of the battery cell 20. In en embodiment, a pressure relief mechanism for relieving internal pressure may be further disposed on the end cap 212 when the internal pressure or temperature of the battery cell 20 reaches a threshold value. The end cap 212 may be made of various materials, such as copper, iron, aluminum, stainless steel, aluminum alloy, plastic, etc. The embodiments of the present application impose no special limitations thereto. In an embodiment, an insulation piece may be further disposed on an inner side of the end cap 212, and the insulation piece may be used to isolate an electrical connection component in the case 211 from the end cap 212 to reduce a risk of a short circuit. For example, the insulation piece may be plastic, rubber, etc.

The case 211 is a component configured to cooperate with the end cap 212 to form an internal environment of the battery cell 20, where the formed internal environment may be used to accommodate the electrode assembly 220, an electrolyte, and other components. The case 211 and the end cap 212 may be separate members, and an opening may be provided in the case 211, and the inner environment of the battery cell 20 may be formed by closing the end cap 212 at the opening. Without limitation, the end cap 212 and the case 211 may also be integrated. Specifically, the end cap 212 and the case 211 may form a joint connection surface before other components are fitted into the case, and then the end cap 212 is enabled to cover the case 211 when an interior of the case 211 needs to be enclosed. The case 211 may be in various shapes and various dimensions, such as cuboid, cylinder, hexagonal prism, and the like. Specifically, the shape of the case 211 may be determined based on a specific shape and dimension of the electrode assembly 220. The case 211 may be made of various materials, such as copper, iron, aluminum, stainless steel, aluminum alloy, plastic, and the like. This is not specially limited in the embodiments of the present application.

The electrode assembly 220 is a component in the battery cell 20 in which an electrochemical reaction occurs. The case 211 may include one or more electrode assemblies 220. The electrode assembly 220 includes a first electrode plate 2231, a second electrode plate 2232, and a separator 226. The first electrode plate 2231 and second electrode plate 2232 have different polarities. That is, one of the first electrode plate 2231 and second electrode plate 2232 is a positive electrode plate, and the other is a negative electrode plate. During charging and discharging of the battery cell, intercalation/de-intercalation of active ions (e.g., lithium ions) are enabled at the positive electrode plate and negative electrode plate by moving the active ions between the positive electrode plate and negative electrode plate. The separator 226 is provided between the positive electrode plate and the negative electrode plate to prevent the positive and negative electrodes from being short-circuited and to allow active ions to pass therethrough. The electrode assembly 220 is stacked in the order of the positive electrode plate-the separator 226-the negative electrode plate-the separator 226, and wound to prepare a cylindrical electrochemical structure, and after winding, the electrode assembly 220 is further sleeved with a binding layer 250, so that the positive electrode plate, negative electrode plate, and separator 226 are closely wound together. The binding layer 250 includes, but is not limited to, an insulating film, such as a blue film.

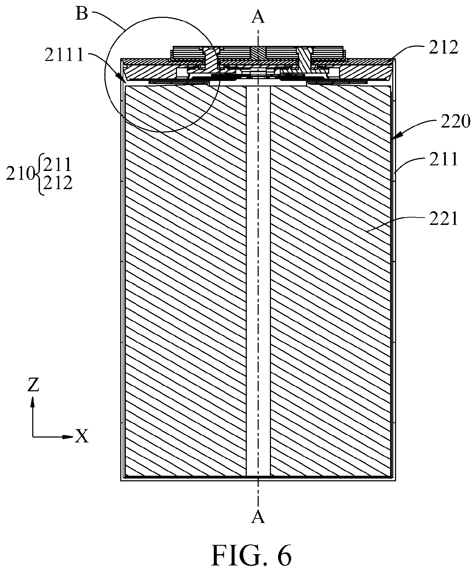

Referring to FIGS. 4 to 12, the embodiment of the present application provides a battery cell 20 including a housing 210, an adapter 230, and an electrode assembly 220, and the housing 210 has a mounting cavity 2111; the electrode assembly 220 is located in the mounting cavity 21111, and includes a body portion 221 and a tab group 222, the body portion 221 is a cylindrical structure formed by winding an electrode plate 223, tabs 224 are led out of at least two turns of the electrode plate 223 from an end face of the body portion 221, and a plurality of tabs 224 led out of the electrode plate 223 that are arranged in a radial direction of the body portion 221 form the tab group 222; and the tab group 222 is bent toward an end of the body portion 221, the tab 224 in the tab group 222 is bent to form a welding section 2241 and a connection section 2243, and the connection section 2243 is connected between the body portion 221 and the welding section 2241, and is curved; welding sections 2241 of a plurality of tabs 224 in the tab group 222 are stacked in an axial direction of the body portion 221 and form a welding portion 2221, and connection sections 2243 of a plurality of tabs 224 in the tab group 222 are stacked in a radial direction of the body portion 221 and form a connection portion 2222; and the adapter 230 and the welding portion 2221 are stacked in the axial direction of the body portion 221, and the adapter 230 is welded to the welding portion.

The body portion 221 may refer to a cylindrical structure formed by winding the electrode plate 223; and exemplarily, the body portion 221 may also be a part of a cylindrical structure formed by winding the positive current collector, negative current collector, and the separator 226, where the electrode plate 223 in the following embodiment may refer to a positive electrode plate or a negative electrode plate.

The tab 224 may refer to a conductive component led out form an end face of the body portion 221; specifically, the tab 224 may also refer to a portion led out from an edge of a current collector of the electrode plate 223 and is not coated with active materials; as may be understood, and as shown in FIGS. 3, 11, and 12, before the electrode plate 223 is wound, the electrode plate 223 and the separator 226 are stacked in a flattening manner, the electrode plate 223 is provided with a plurality of tabs 224, and the plurality of tabs 224 are sequentially distributed at intervals in a longitudinal direction of a current collector; after the electrode plate 223 is wound one turn after another turn, tabs 224 are led out of at least a part of the electrode plates 223, that is, tabs 224 are led out of at least two turns of the electrode plate 223 from an end of the body portion 221; and at least a part of tabs 224 having the same polarity are concentrated in one place and stacked in a radial direction of the body portion 221 to form a tab group 222, that is, the tab group 222 refers to a combination formed by stacking a plurality of tabs 224 of the same polarity in the radial direction of the main body portion 221; and further, the tabs 224 are bent into a curved shape as the electrode plate 223 is wound. Here, the number of the tab groups 222 may be multiple, and is specifically set according to a connection structure with the adapter 230; and the tab groups 222 may be divided into a positive tab group 222 and a negative tab group 222, where the tab 224 in the positive tab group 222 is a positive tab, the tab 224 in the negative tab group 222 is a negative tab, the tab 224 led out of the positive electrode plate is a positive tab, and the tab 224 led out of the positive electrode plate is a negative tab.

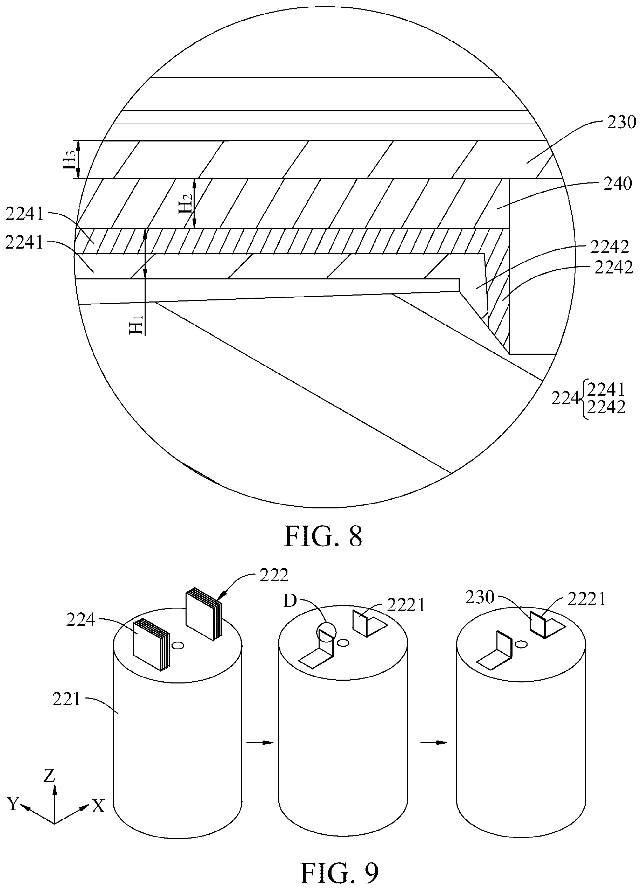

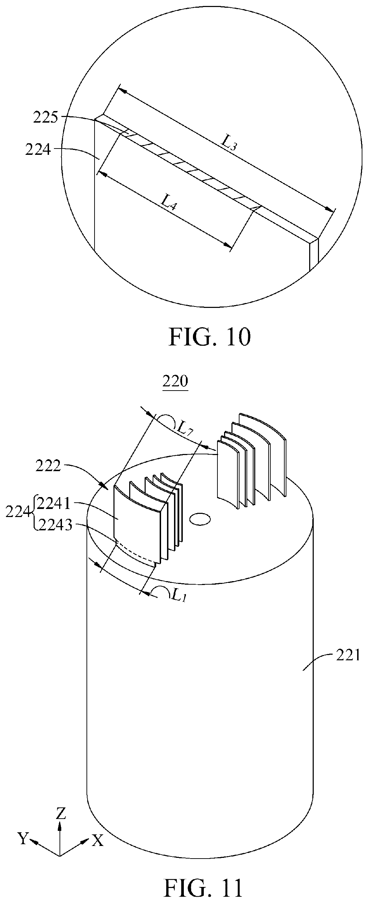

Referring to both FIGS. 9 and 10, in a practical preparation process, before the tab group 222 is bent, the tab group 222 may be pressed and furled in a stacking direction (X direction) of the tabs 224, and then bent toward the end face of the body portion 221, thereby the electrode assembly 220 has a reduced height and is also convenient to be stacked with and welded to the adapter 230.

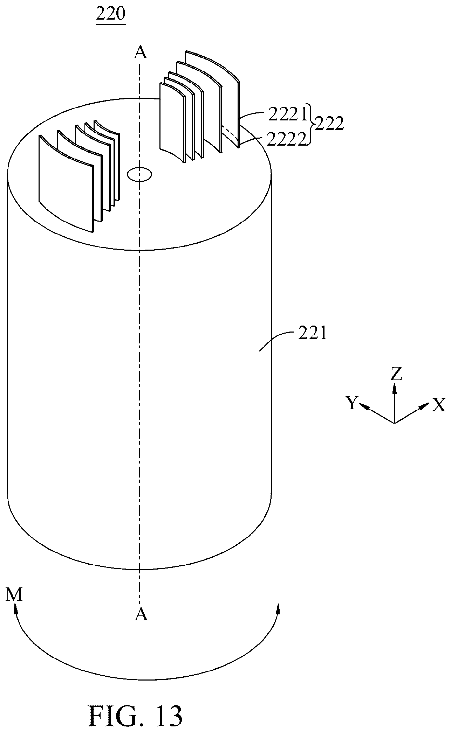

The tab 224 in the tab group 222 is bent to form a welding section 2241 and a connection section 2243, and the connection section 2243 is connected between the body portion 221 and the welding section 2241, and is curved; as can be understood, after the tab 224 is bent, the tab 224 is divided into two parts by a bent point (see the dotted line in FIG. 11) of the tab 224, a part close to the body portion 221 being a connection section 2243, and a part far from the body portion 221 being a welding section 2241;exemplarily, and as shown in FIG. 13, where the dotted line on the tab group 222 indicates a bending point of the tab group 222, the tab group 222 is bent along the dotted line, the tab group 222 is divided into two parts by the dotted line, a portion connected to the body portion 221 being the connection section 2222, and a portion connected to the connection section 2222 being the welding section 2221, wherein a portion of the tab 224 located in the welding portion 2221 is a welding section 2241, and a portion of the tab 224 located in the connection portion 2222 is a connection section 2243, and after the tab group 222 is bent toward the end face of the body portion 221, the connection sections 2243 of the plurality of tabs 224 in the tab group 222 are stacked in the radial direction of the body portion 221, and the welding sections 2241 of the plurality of tab 224 in the tab group 222 are stacked in the axial direction of the body portion 221. Here, for the radial direction of the body portion 221, reference may made to the X direction in figures, for the axial direction of the body portion 221, reference may made to the Z direction in figures, for the axis of the body portion 221, reference may made to the A-A line in figures, and for the circumferential direction of the body portion 221, reference may made to the direction indicated by the double-headed arrow M in figures.

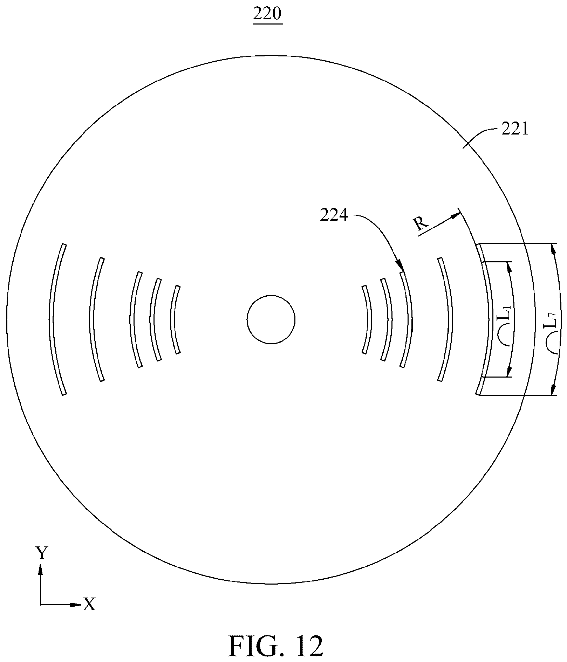

The connection section 2243 is curved, as may be understood, as shown in FIGS. 11 and 12, after the electrode plate 223 is wound, the tab 224 is led out in the axial direction of the body portion 221 and is arc-shaped; after the tab 224 is furled and bent, the welding section 2241, by being pressed, may be plane-like or may maintain a certain curvature; and the connection section 2243 may have a proximal part which is linear and a part close to the body portion 221 which always has a certain curvature, or may be, as a whole, maintained with a certain curvature; but the connection section 2243 is always arc-shaped to some degree and is curved as it is affected by winding of the electrode plate 223.

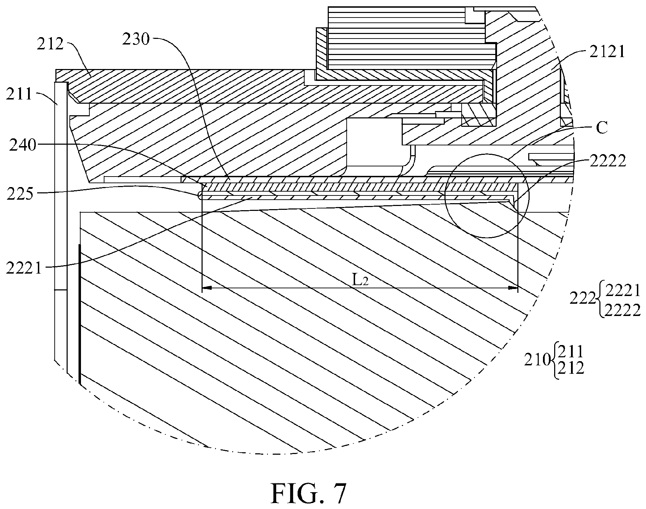

The adapter 230 may refer to a component to be welded to the tab 224 of the electrode assembly 220, and the adapter 230 is electrically conductive for outputting or inputting electric power of the electrode assembly 220. In an embodiment, as shown in FIG. 7, the adapter 230 may be mounted on the end cap 212; for example, the end cap 212 is provided with the electrode terminal 2121, the adapter 230 is provided at an inner side of the end cap 212, the adapter 230 is connected to the electrode terminal 2121 to output or input electric energy of the battery cell 20 by the electrode terminal 2121, and the adapter 230 may be integrally connected to the electrode terminal 2121, or separately connected to the electrode terminal 2121, for example, the adapter 230 may be connected to the electrode terminal 2121 by welding, clamping, screwing, etc. In some other embodiments, the adapter 230 may also be mounted on the case 211, for example, the adapter 230 may be mounted on a wall surface of the case 211 with the end cap 212. The adapter 230 may be made of a conductive material having certain hardness and strength, such as copper, aluminum, etc. As noted, where the adapter 230 is connected to the electrode terminal 2121, the material of the adapter 230 may be identical to or different from that of the electrode terminal 2121. The welding portion 2221 and adapter 230 are stacked in the axial direction of the body portion 221; the adapter 230 is welded to the welding portion 2221 in the axial direction of the body portion 221 when practical welding, so that the adapter 230 can be welded to at least most of the welding sections 2241 in the welding portion 2221 to enable good welding strength between the welding portion 2221 and the adapter 230, facilitating to increase reliability of electrical connection between the welding portion 2221 and the adapter 230.

In the battery cell 20 of the embodiment of the present application, after winding of the electrode assembly 220 is completed, the tab 222 group led out of the end of the body portion 221 of the electrode assembly 220 are bent, and the tabs 224 in the tab group 222 form the welding sections 2241 and connection sections 2243 after the bending; and after the tab group 222 is bent, the welding sections 2241 of the plurality of tabs 224 in the tab group 222 are stacked in the axial direction of the body portion and form the welding portion 2221, the connection portions 2222 of the plurality of tabs 224 in the tab group 222 are stacked in the radial direction of the body portion 221, and then the adapter 230 is welded onto the welding portion 2221, so as to complete welding of the tabs 224 and the adapter 230; and in this process, after the tabs 224 are bent, the welding sections 2241 of the plurality of tabs 224in the tab group 222can be smoothly stacked together to form a tight welding portion 2221, thereby reducing the problem of poor welding that occurs for the welding portion 2221 and the adapter 230 to facilitate to increase the performance of the battery cell 20.

In another embodiment, as shown in FIG. 11 and FIG. 12, a length of the connection section 2243 is $L_1$, and the radius of one turn where the electrode plate 223 is correspondingly connected to the connection section 2243 is R, wherein the radius of one turn where the electrode plate 223 is correspondingly connected to the connection section 2243 is R, wherein

$$\frac{L_1}{R} \le 3.14 \quad .$$

The length of the connection section 2243 may refer to an arc length $L_1$ of the connection section 2243 before the tab 224 is furled and bent.

One turn where the electrode plate 223 is correspondingly connected to the connection section 2243 may refer to a turn of the electrode plate 223 connected to the connection section 2243, wherein, after the electrode plate 223 is wound, the electrode plate 223 forms turns with a nearly circular shape; and in practical measurement, one turn where the electrode plate 223 is correspondingly connected to the connection section 2243 may refer to a turn of the electrode plate 223 wound around an axis of the body portion section 221 from a side of the connection section 2243 toward the other side of the connection section 2243, and a half of a size of the turn is R in a radial direction of the body portion section 221.

By adopting the technical solution of the embodiment, radians of tabs 224 correspondingly led out of different-radii turns of the electrode plate 223 may be not too large via control, thereby promoting furling and bending of the tab 224; and further, furling and bending of the tab 224 apply small force to the body portion 221 to reduce risks of cracking of tab 224, and active material disengaging, etc., facilitating to increase the yield and performance of the battery cell 20.

In another embodiment of the present application, as shown in FIG. 11 and FIG. 12, $\frac{L_1}{R} \le 1.57$ .

By adopting the technical solution of the embodiment, tabs 224 led out of radians of turns, corresponding to different radii of the electrode plate 223 have relatively small radians, so that furling and bending of the tab 224 are simpler and more labor-saving, and furling and bending of the tab 224 apply small pulling force to the body portion 221, which can effectively reduce risks of cracking of tab 224, and active material disengaging, etc., to effectively increase the yield and performance of the battery cell 20.

In an embodiment, a value of $\frac{L_1}{R}$ may be, but is not limited to, 0.1, 0.4, 0.8, 1.2, 1.57, 1.6, 1.8, 2, 2.2, 2.4, 2.6, 2.8, 3, or 3.14.

In another embodiment of the present application, as shown in FIGS. 11 and 12, a length $L_1$ of a connection section 2243 of at least one of the tabs 224 is smaller than a length $L_7$ of a welding section 2241.

The length $L_7$ of the welding section 2241 may refer to an arc length of the welding section 2241 before the tab 224 is furled and bent. Here, both the connection section 2243 and the welding section 2241 are located within the same tab, i.e., the connection section 2243 and the welding section 2241 in the same tab have different lengths, and the length of the connection section 2243 is smaller than that of the welding section 2241, and as shown in FIGS. 11 and 12, the tab 224 has notches formed at opposite ends of the connection section 2243, so that the length $L_1$ of the connection section 2243 is smaller than that of the length $L_7$ of the welding section 2241. Here, the opposite ends of the tabs 224 at the connection section 2243 refer to the opposite ends of the connection section 2243 in the circumferential direction of the body portion 221. In addition, the number of the tab in which the length of the connection section 2243 is smaller than that of the welding section 2241 may be one, two, three, or four or more; and all the tabs 224 in the tab group 222 may employ a structure in which the length of the connection section 2243 is smaller than that of the welding section 2241.

By adopting the technical solution of the embodiment, the length of the connection section 2243 is shorter than that of the welding section 2241, and furling and bending of the tab 224 are easier and quicker, facilitating the furling and bending of the tab 224.

In an embodiment, as shown in FIGS. 9 and 10, the tab group 222 is provided with a pre-welding structure 225 for connecting a plurality of the tabs 224 in the tab group 224.

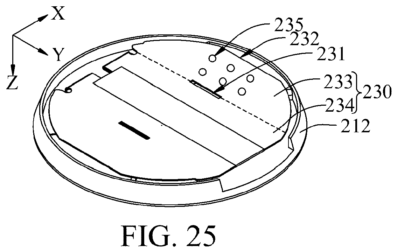

The pre-welding structure 225 may refer to a welding structure formed by welding the plurality of tabs 224 in the tab group 222 together before the welding portion 2221 is welded to the adapter 230, and exemplarily, the pre-welding structure 225 may refer to a structure such as a weld bead, a weld mark, etc. by which the plurality of tabs 224 in the tab group 222 are welded together. Here, as shown in FIG. 25, a connection structure 225 is formed for welding the tab group 222 and the welding portion 2221, the pre-welding structure 225 and the connection structure 235 are staggered, so that two times of welding for the tab group 222 are not performed at the same position, facilitating to increase a welding quality and performance of the battery cell 20, wherein the pre-welding structure 235 may be disposed at a side edge of the tab group 222, the connection structure 235 is disposed at a middle portion of the welding portion 2221; and the pre-welding structure 225 and the connection structure 235 may also be disposed on a surface of the welding portion 2221 facing the adapter 230 and are staggered, wherein the connection structure 235 may refer to a structure such as a weld bead or a weld mark by which the welding portion 2221 and the adapter 230 are welded together.

By adopting the technical solution of the embodiment, before the tab group 222 is bent, the plurality of tabs 224 in the tab group 222 are pre-welded together to form a whole, thereby reducing a risk of a loose tab group 222; and further, after the tab group 222 is bent, the plurality of tabs 224 in the tab group 222 more closely abut against each other to form a more compact welding portion 2221, facilitating to increase a welding quality for the tabs 224 and the adapter 230 to increase the performance of the battery cell 20.

In another embodiment of the present application, as shown in FIGS. 9 and 10, the pre-welding structure 225 is provided at the welding portion 2221.

By adopting the technical solution of the embodiment, the pre-welding structure 225 can enable that the plurality of welding sections 2241 in the tab group 222 are welded together, the welding portion 2221 is not easily loose after the tab group 222 is bent, and a compact welding portion 2221 can be formed after the tab 224 is bent, so that welding between the tab 224 and the adapter 230 has a better quality, enabling better performance of the battery cell 20; and further, the pre-welding structure 225 is not welded to the connection section 2243, so that the connection section 2243 can relatively move when the tab group 222 is bent, to promoting bending of tabs.

In another embodiment of the present application, as shown in FIGS. 5~7, a spacing between the pre-welding structure 225 and the connection portion 2222 is $L_2$, where $0.1mm \leq L_2 \leq 10mm$.

By adopting the technical solution of the embodiment, the spacing between the pre-welding structure 225 and the connection section 2243 is within the above-mentioned range, and there is a certain distance between the bent point of the tab group 222 and the body portion 221, so that when the tab group 222 is bent, the joint of the body portion 221 with the tab 224, and the pre-welding structure 225 are not excessively pulled, on one hand, the tab group 222 can be bent more smoothly, reducing risks of cracking of the tab 224 and active material disengaging, etc., so as to facilitate to increase the yield and performance of the battery cell 20; on the other hand, by the pre-welding structure 225, the plurality of welding sections 2241 in the tab group 222 can be stably welded together, so that the welding portion 2221 is not likely to be loose, and a compact welding portion 2221 can also be formed after the tab 224 is bent, enabling a better welding quality between the tab 224 and the adapter 230, and better performance of the battery cell 20.

In another embodiment of the present application, as shown in FIGS. 5~7, $0.5mm \leq L_2 \leq 10mm$

By adopting the technical solution of the embodiment, the distance between the pre-welding structure 225 and the connection section 2243 is designed more suitably, and a risk of pulling a joint of the tab 224 and the body portion 221 due to bending of the tab 224 can be reduced, so that the tab group 224 can be smoothly bent.

In an embodiment, the value of $L_2$ may be, but is not limited to, 0.1 mm, 0.5 mm, 1 mm, 1.5 mm, 2 mm, 2.5 mm, 3 mm, 3.5 mm, 4 mm, 4.5 mm, 5 mm, 5.5 mm, 6 mm, 6.5 mm, 7 mm, 7.5 mm, 8 mm, 8.5 mm, 9 mm, 9.5 mm, or 10 mm.

In another embodiment of the present application, as shown in FIGS. 9 and 10, the pre-welding structure 225 is located at an end of the welding portion 2221 facing away from the connection section 2243.

By employing the technical solution of the embodiment, before the tab group 222 is bent, the ends, away from the connection section 2243, of the welding section 2241 in the tab group 222 are welded together, enabling a simple, convenient welding operation; and further, when the tab 224 is bent, the portion of the welding section 2241 close to the connection section 2243 may also move along with the bending, so that an operation of bending the tab group 222 can be more time- and labor-saving.

In another embodiment, the pre-weld structure 225 may also be provided on the side where the weld 2221 meets the connection 2222.

In another embodiment of the present application, as shown in FIG. 9 and FIG. 10, the length of the welding portion 2221 is $L_3$, and the length of the pre-welding structure 225 in the longitudinal direction of the welding portion 2221 is $L_4$, wherein $0.2 \leq \dfrac{L_4}{L_3} < 1$.

The length $L_3$ of the welding portion 2221 may refer to a length dimension of the welding portion 2221 in a longitudinal direction (Y direction) of the welding section 2241.

The length $L_4$ of the pre-welding structure 225 may refer to a length dimension of the pre-welding structure 225 in the longitudinal direction of the welding portion 2221.

By adopting the technical solution of the embodiment, the ratio of the length $L_4$ of the pre-welding structure 225 to the length $L_3$ of the welding portion 2221 is within the above range, so that the plurality of welding sections 2241 in the tab group 22 can be reliably welded together by the pre-welding structure 225, and thus, a risk of a loose welding portion 2221 is reduced, and a risk of damage to other components caused by pre-welding of the tab 224 is also reduced.

In an embodiment, a value of $\dfrac{L_4}{L_3}$ may be, but is not limited to, 0.2, 0.3, 0.4, 0.5, 0.6, 0.7, 0.8, 0.9, or 0.99.

In another embodiment of the present application, as shown in FIG. 11 and FIG. 12, the total number of turns of the electrode plate 223 is $N_1$, and the total number of turns of the electrode plate 223 to which the tab 224 is connected is $N_2$, wherein $0.1 \leq \dfrac{N_2}{N_1} \leq 0.9$.

The total number of turns of the electrode plate 223 may refer to the number of winding turns of the electrode plate 223 in the electrode assembly 220.

The total number of turns of the tab 224 connected to the electrode plate 223 may be the sum of the number of turns, of which the tab 224 is led out, in the electrode plate 223 of the electrode assembly 220.

By adopting the technical solution of the embodiment, the ratio of the total number of turns of the tabs 224 led out of the electrode plate 223 to the total number of turns of the electrode plate 223 is within the above-mentioned range, so that the number of the tabs 224 that can be led out of the electrode assembly 220 is within a suitable range, facilitating to reduce an internal resistance of the electrode assembly 220 during charging and discharging and facilitating rapid charging and discharging of the battery cell 20; and also, the number of the tabs 224 in the tab group 222 led out of the electrode assembly 220 is suitable, and also, the tab group 222 is easily bent.

In another embodiment of the present application, $0.3 \leq \dfrac{N_2}{N_1} \leq 0.7$ .

By adopting the technical solution of the embodiment, the ratio of the total number of turns of the tab 224 led out of the electrode plate 223 to the total number of turns of the electrode plate 223 is more suitable, and the number of the tab 224 is suitable, facilitating both rapid charging and discharging of the battery cell 20 and bending of the tab group 222.

In an embodiment, a value of $\dfrac{N_2}{N_1}$ may be, but is not limited to, 0.1, 0.2, 0.3, 0.4, 0.5, 0.6, 0.7, 0.8, or 0.9.

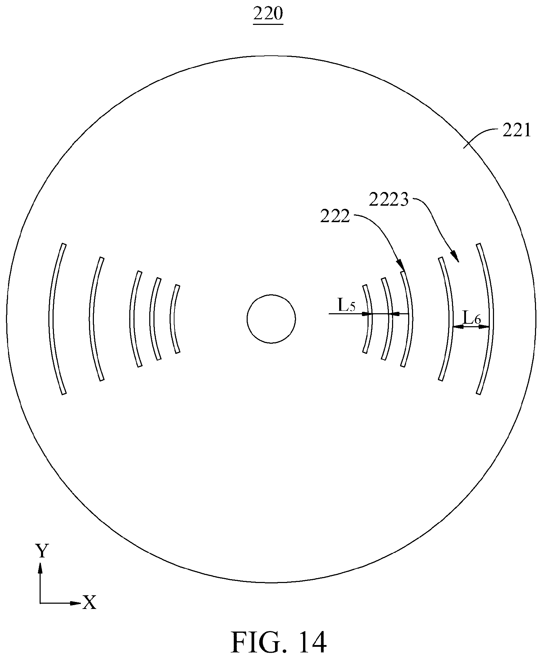

In another embodiment of the present application, as shown in FIG. 13 and FIG. 14, the tabs 224 is led out of the electrode plate 223 at intervals from the end surface of the body portion 221 and form a plurality of tab groups 222, and the plurality of tab groups 222 are arranged at intervals in the radial direction of the body portion 221.

As may be understood, in the radial direction of the body portion 221, the electrode plate 223 form a plurality of tab groups 222 in such a manner that the tabs 224 are led out at intervals (being led out at intervals of one turn), the tabs 224 are led out of a part of the turns of the electrode plates 223, the turns of the electrode plates 223 of which the tab 224 is not lead out is an spacing turn, the spacing turn of which the tab 224 is not led out enables that the tabs 224 led out of the electrode plate 223 have an interval gap 2223, the tabs 224 led out of the electrode plates 223 are divided into a plurality of groups by spacing of the interval gap 2223, i.e., a plurality of tab groups 222 are formed; the spacing gap 2223 is formed between connection portions 2222 of two adjacent tab groups 222, the turn in the electrode plate 223 corresponding to the spacing gap 2223 is a spacing turn of which the tab 224 is not led out at the position corresponding to the spacing gap 2223, while the tab 224 is or is not led out of other positions at the spacing turn; the spacing gap 2223 may refer to the gap formed between two adjacent tab groups 222 before the tab groups 222 are bent, and may refer to the gap formed between connection portions 2222 of two adjacent tab groups 222 after the tab groups 222 are bent; and the spacing turn may refer to the turn in the electrode plate 223 that is opposite to the spacing gap 2223 and the tab 224 is not led out of the pacing gap 2223, i.e., the turn in the electrode plate 223 of which the tab 224 inserting into the spacing gap 2223 is not led out is a spacing turn. The number of the spacing turn between two adjacent tab groups 222 may be one, two, three, or more than four, and may be determined according to the manner to form a tab 224 from the electrode plate 223 via spacing.

It may be understood that the number of the tab groups 222 is plural. For example, the number of the tab groups 222 is two, three, four, or more.

The connection portions 2222 of the plurality of tab groups 222 are provided at intervals in the radial direction of the body portion 221, it may be understood that the plurality of tab groups 222 are provided at intervals in the radial direction of the body portion 221 before the tab groups 222 are not bent, the welding portions 2221 are parallel or nearly parallel with respect to the end face of the body portion 221 after the tab groups 222 are bent, so that the welding portions 2221 of the plurality of tab groups 222 are stacked in the axial direction of the body portion 221 to facilitate welding to the adapter 230; and the connection portions 2222 are perpendicular or nearly perpendicular with respect to the end face of the body portion 221, so that the connection portions 2222 of the plurality of tab groups 222 are provided at intervals in the radial direction of the body portion 221.

By adopting the technical solution of the embodiment, the number of the tabs 222 led out of the electrode assembly 220 can be reduced to promote bending of the tabs 224; and the number of the tab groups 222 is plural, the number of the tabs 224 in a single tab group 222 is small, and bending of the tab group 222 is more easily, so that an operation of bending the tab groups 222 is also more time- and labor-saving by such a mode to bend the tab group 222 in a grouping mode.

In another embodiment of the present application, the number of the tabs 224 in the tab group 222 close to the inner turn of the electrode plate 223 is $N_3$, and the number of the tabs 224 in the tab group 222 close to the outer turn of the electrode plate 223 is $N_4$, where $N_3 > N_4$.

The inner turn of the electrode plate 223 may refer to the first turn for winding the electrode plate 223, and the inner turn of the electrode plate 223 is disposed close to an axis away from the body portion 221.

The outer turn of the electrode plate 223 may refer to the last turn for winding the electrode plate 223, and the outer turn of the electrode plate 223 is disposed away from the axis of the body portion 221.

By adopting the technical solution of the embodiment, the tab 224 close to the inner turn of the electrode plate 223 has a small width, the tab 224 close to the outer turn of the electrode plate 223 has a large width, the number of the tabs 224 in the tab group 222 close to the inner turn of the electrode plate 223 is larger than that of the tabs 224 in the tab group 222 close to the outer turn of the electrode plate 223, i.e., the tabs 224 in the tab group 222 close to the outer turn of the electrode plate 223 are arranged in a relatively sparse manner, and the tabs 224 in the tab group 222 close to the inner turn of the electrode plate 223 are arranged in a relatively dense manner, promoting bending of the tab group 222; further, the current flow area of the tab group 222 close to the outer turn of the electrode plate 223 is not much different from that of the tab group 222 close to the inner turn of the electrode plate 223, facilitating better charging and discharging of the battery cell 20; and in the case that the current flow area of the tab group 222 close to the outer turn of the electrode plate 223 is identical to that of the tab group 222 close to the inner turn of the electrode plate 223, it is not the case that the tabs 224 in the tab group 222 close to the inner turn cannot be bent since they are designed to be too wide.

Here, as noted, the width of the tab 224 may refer to a dimension of the tab 224 in the circumferential direction of the body portion 221 before the tab 224 is bent.

In another embodiment of the present application, the number of the tabs 224 in the plurality of tab groups 222 gradually decreases in a first direction which is a direction in which the inner turn of the electrode plate 223 points to the outer turn of the electrode plate 223.

The first direction, for example, as shown in FIG. 14, may refer to the X direction.

The number of the tabs 224 in the plurality of tab groups 222 gradually decreases in the first direction, and as can be understood, the closer the tabs 224 of the tab group 222 get to the inner turn of the electrode plate 223, the larger the number of the tabs 224 of the tab group 222 is, and the closer the tabs 224 of the tab group 222 get to the outer turn of the electrode plate 223, the less the number of the tabs 224 of the tab group 222 is.

By adopting the technical solution of the embodiment, generally, the tab 224 closer to the inner turn of the electrode plate 223 has a smaller width, the tab 224 closer to the outer turn of the electrode plate 223 has a smaller width, the number of the tabs 224 of the tab group 222 closer to the outer turn of the electrode plate 223 has a smaller number, and thus, the number of the tabs 224 in the tab group 222 with a smaller width of the tab 224 is larger, the number of the tabs 224 in the tab group 222 with a larger width of the tab 224 is smaller, the tab group 222 can be easily bent, and the number of the tabs 224 led out form the electrode assembly 220 is relatively large, facilitating faster charging and discharging of the battery cell 20.

In another embodiment, the number of the tabs 224 in the plurality of tab groups 222 may also decrease stepwise in the first direction. That is, there is a case where the numbers of tabs 224 in two adjacent tab groups 222 are the same.

In another embodiment of the present application, as shown in FIG. 13 and FIG. 14, the spacing between the connection portions 2222 of two adjacent tab groups 222 close to the inner turn of the electrode plate 223 is $L_5$, and the spacing between the connection portions 2222 of two adjacent tab groups 222 close to the outer turn of the electrode plate 223 is $L_6$, where $L_6 > L_5$.

As shown in FIG. 13 and FIG. 14, before the tab groups 222 are not bent, the spacing between the connection portions 2222 of the two adjacent tab groups 222 may refer to a spacing between the two adjacent tab groups 222; and after the tab groups 222 are bent, the welding portions 2221 are parallel to the end surface of the body portion 221, and the welding portions 2221 of the plurality of tab groups 222 may be stacked together, but connection portions 222 of two adjacent tab groups have a spacing therebetween.

By adopting the technical solution of the embodiment, the number of the tab groups 222 close to the inner turn of the tab 224 is large, the number of the tab groups 224 close to the outer turn of the tab 224 is small, the tab 224 close to the inner turn of the electrode plate 223 has a small width, and the tab 224 close to the outer turn of the electrode plate 223 has a large width, so that the electrode assembly 220 has a current flowing area close to the outer turn of the electrode plate 223 that is not much different from that close to the inner turn of the electrode plate 223, facilitating better charging and discharging of the battery cell 20; and in the case that the electrode assembly 220 has a current flowing area close to the outer turn of the electrode plate 223 which is identical to that close to the inner turn of the electrode plate 223, it is not the case that the tabs 224 in the tab group 222 close to the inner turn cannot be bent since they are designed to be too wide.

In another embodiment of the present application, as shown in FIG. 13 and FIG. 14, the spacing between connection portions 2222 of two adjacent tab groups 222 gradually increase in a first direction which is a direction in which the inner turn of the electrode plate 223 points to the outer turn of the electrode plate 223.

The spacing between connection portions 2222 of two adjacent tab groups 222 gradually increases in the first direction which is a direction in which the inner turn of the electrode plate 223 points to the outer turn of the electrode plate 223. As can be understood, the number of tab groups 222 closer to the inner turn of the electrode plate 223 is greater, the number of tab groups 222 closer to the outer turn of the electrode plate 223 is less, the width of the tab 224 closer to the inner turn of the electrode plate 223 is less, and the length closer to the outer turn of the electrode plate 223 is larger.

By adopting the technical solution of the embodiment, the closer the tab groups 222 get to the inner turn of the electrode plate 223, the larger the number of the tab groups 222 is, and the closer the tab groups 222 get to the outer turn of the electrode plate 223, the smaller the number of the tab groups 222 is, so that the current flowing area close to the inner turn of the electrode plate 223 is less different from that close to the outer turn of the electrode plate 223, facilitating to increase the performance of the battery cell.

In another embodiment, the spacing between connection portions 2222 of two adj acent tab groups 222 reduces stepwise in the first direction. That is, there is a case where the spacings between connection portions 2222 of two adjacent tab groups 222 are the same.

In another embodiment of the present application, the electrode assembly 220 includes a plurality of tab groups 222 disposed at intervals along the circumferential direction of the body portion 221.

The plurality of tab groups 222 may be disposed in a scattering way in the circumferential direction of the body portion 221, so that a single tab group 222 may be provided with a relatively small number of tabs 224, facilitating bending of the tab group 222; wherein, one tab group 222 here may be obtained by the above manner to lead out the tabs 224 at intervals, that is, the tab group 222 may be formed with a spacing gap 2223, and the spacing gap divide the tab group 222 into many parts arranged in the radial direction of the body portion 221, so that a smaller number of tabs 224 may be set in the tab group 222, facilitating bending of the tab group 222.

By adopting the technical solution of the embodiment, the tab groups 222 are distributed in a scattering way, and a less number of tabs 224 can be provided in a single tab group 222, promoting bending of the tab groups 222.

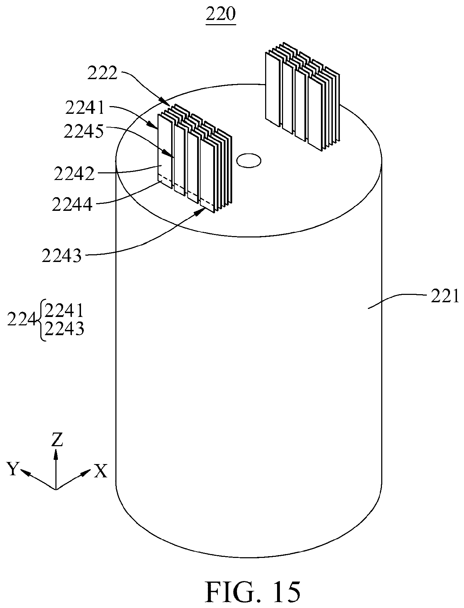

In another embodiment of the present application, as shown in FIG. 15, at least one of the welding section 2241 and the connection section 2243 is provided with an openwork structure 2245.

At least one of the welding section 2241 and the connection section 2243 is provided with the openwork structure 2245, and as may be understood, the welding section 2241 is provided with the openwork structure 2245, or the connection section 2243 is provided with the openwork structure 2245, or both the welding section 2241 and the connection section 2243 are provided with the openwork structure 2245, wherein the openwork structure 2245 may refer to a structure such as a through-hole, a notch, or a through-groove in the welding section 2241 or connection section 2243.

By adopting the technical solution of the embodiment, the design of the openwork structure 2245 can reduce the structural strength of the tab 224, thereby promoting the bending of the tab 224.

In another embodiment of the present application, as shown in FIG. 15, in the case that the welding section 2241 is provided with the openwork structure 2245, the welding section 2241 includes a plurality of welding segments 2242 connected to the connection section 2243, the plurality of welding segments 2242 are arranged at intervals along the length direction of the connection section 2243, and a gap between two adjacent welding segments 2242 forms the openwork structure 2245.

The welding section 2241 is divided into the plurality of welding segments 2242 in the length direction of the welding section 2241, two adjacent welding segments 2242 are disposed apart from each other, and a gap is formed between the two adjacent welding segments 2242, and forms the openwork structure 2245.

Exemplarily, the welding section 2241 is provided with a plurality of through grooves (i.e., gaps) passing through the welding section 2241 in its height direction.

By adopting the technical solution of the embodiment, the welding section 2241 is divided into a plurality of welding segments 2242 in the length direction thereof, two adjacent welding segments 2242 are disposed apart from each other, and the welding segments 2242 have a small width when the tab 224 is bent, so that bending of the tab 224 is time- and labor-saving.

In another embodiment of the present application, as shown in FIG. 15, in the case that the connection section 2243 is provided with the openwork structure 2245, the connection section 2243 includes a plurality of connection segments 2244 connected to the welding section 2241, the plurality of connection segments 2244 are arranged at intervals in the circumferential direction of the body portion 221, and a gap between two adjacent connection segments 2244 forms the openwork structure 2245.

The connection section 2243 is divided into a plurality of connection segments 2244 in the circumferential direction of the body portion 221, two adjacent connection segments 2244 are disposed apart from each other, and a gap is formed between two adjacent connection segments 2244, and forms the openwork structure 2245. Exemplarily, the connection section 2243 is provided with a plurality of through grooves (i.e., gaps) passing through the connection section 2243 in its height direction.

By adopting the technical solution of the embodiment, the connection section 2243 is divided into a plurality of connection segments 2244 in the circumferential direction of the body portion 221, two adjacent connection segments 2244 are disposed apart from each other, and when the tab 224 is bent, the connection segments 2244 has a small width and a small structural strength, enabling convenient bending of the tab 224.

In another embodiment of the present application, as shown in FIG. 15, in the case that both the welding section 2241 and connection section 2243 are provided with the openwork structure 2245, the plurality of welding segments 2242 are connected to the plurality of connection segments 2244 in a one to-one corresponding way.

The plurality of welding segments 2242 in the welding section 2241 are connected to the plurality of connection segments 2244 in the connection section 2243 in a one to-one corresponding way, and it may be understood that before the tab 224 is not bent, the tab 224 is provided with a plurality of through grooves passing through the tab 224 in the height direction, so that the tab 224 is divided to have a disrupted structure with multi stages, each of which includes one welding segment 2242 and one connection segment 2244.

By adopting the technical solution of the embodiment, the tab 224 is divided to have a disrupted structure with multi stages, the tab 224 is easily bent, and the process of bending the tab 224 is also more time- and labor-saving.

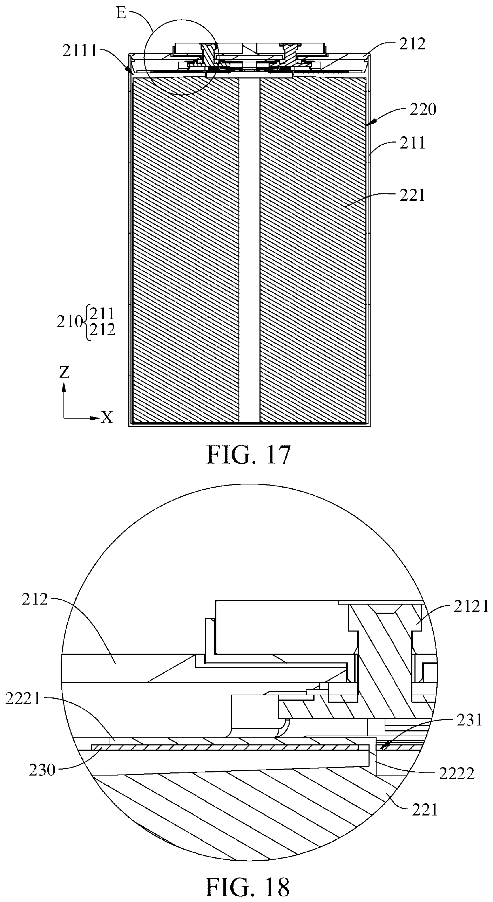

In another embodiment of the present application, as shown in FIGS. 17~20, the end of the welding portion 2221 facing away from the connection portion 2222 is located at the side of the connection portion 2222 facing the inner turn of the tab 224; or the end of the welding portion 2221 facing away from the connection portion 2222 is located at the side of the connection portion 2222 facing away from the inner turn of the tab 224.

In the process of bending the tab 224, the tab 224 is bent toward the axis of the body portion 221; and after the bending is completed, the end of the welding portion 2221 facing away from the connection portion 2222 is located at the side of the connection portion 2222 facing the inner turn of the tab 224, such a structural design enables that the tab 224 is concentrated toward the axis of the body portion 221, with good structural compactedness to facilitate the energy density of the battery cell 20.

In the process of bending the tab 224, the tab 224 is bent away from the axis of the body portion 221; and after the bending is completed, the end of the welding portion 2221 facing away from the connection portion 2222 is located at the side of the connection portion 2222 facing away from the inner turn of the tab 224, such a structural design reduce the case that the tab 224 close to the outer turn of the electrode plate 223 is furled toward the axis of the body portion 221 and then bent toward the outer turn of the electrode plate 223, so that the risk that the tab 224 close to the outer turn of the electrode plate 223 extends outward can be reduced, facilitating to increase the performance of the battery cell 20.

By adopting the technical solution of the embodiment, the bending direction of the tab 224 can be flexibly set, so that different use requirements can be satisfied.

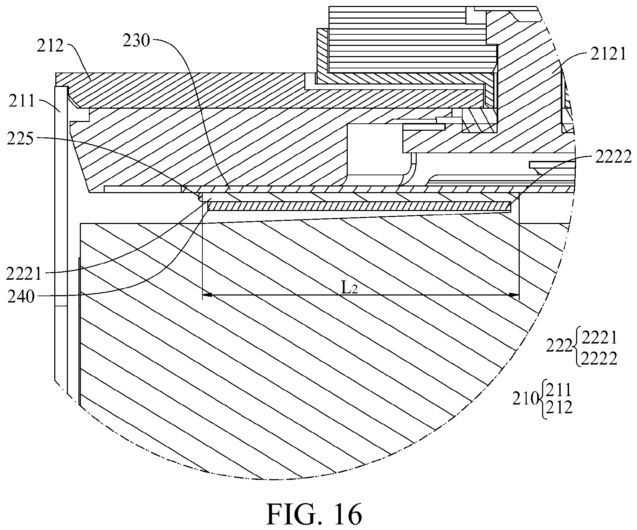

In another embodiment of the present application, as shown in FIGS. 7 and 16, the welding portion 2221 is located between the body portion 221 and the adapter 230.

By adopting the technical solution of the embodiment, after the tab 224 is bent, welding can be made by simply placing the adapter 230 onto the welding portion 2221, with an easy assembling operation.

In another embodiment of the present application, as shown in FIGS. 7 and 16, the battery cell 20 further includes a connector 240 welded between the welding portion 2221 and adapter 230; and/or a welding portion 2221 is welded between the connector 240 and adapter 230.

The connector 240 may refer to a conductive component that is stacked with and welded to the welding portion 2221 and adapter 230, wherein the connector 240 may be located between the welding portion 2221 and the adapter 230, or between the welding portion 2221 and the body portion 221, or between the welding portion 2221 and the adapter 230 and between the welding portion 2221 and the body portion 221; and the connector 240 may be made of a conductive metal, such as copper or aluminum.

In a practical welding process, after the tab 224 is furled and before the tab 224 is bent, the welding section 2241 is in a vertical state, the connector 240 and welding section 2241 are stacked and welded together by a welding laser in a radial direction of the body portion 221, and then the tab 224 is bent and welded to the adapter 230; wherein the connector 240 and the welding section 2241 are welded with the welding laser parallel to the radial direction of the body portion 221, so that the body portion 221 is not damaged even if the tab 224 and the connector 240 is subjected to welded perforation due to the welding laser, increasing the yield of the battery cell 20.

By adopting the technical solution of the embodiment, the provision of the connector 240 may increase a welding thickness to reduce a risk of damage to the body portion 221 due to welded perforation, increasing a welding quality for the welding portion 2221 and the adapter 230.

In another embodiment of the present application, as shown in FIG. 7 and FIG. 8, the thickness of the welding portion 2221 is $H_1$, the thickness of the connector 240 is $H_2$, the number of the connectors 240 is N, and the thickness of the welding position of the adapter 230 and the welding portion 2221 is $H_3$, wherein $\dfrac{H_1 + N \times H_2}{H_3} \geq 1$.

The thickness $H_1$ of the welding portion 2221 may refer to a dimension of the welding portion 2221 in the axial direction of the body portion 221, and the thickness $H_1$ of the welding portion 2221 may be a sum of thicknesses of all the welding sections 2241 in the welding portion 2221.

The thickness $H_2$ of the connector 240 may refer to a dimension of the welding portion 2221 in the axial direction of the body portion 221. Here, the number of the connectors 240 may be one, two, or three or more, for example, as shown in FIG. 7, the number of the connectors 240 is one, and the connectors 240 are welded between the welding portion 2221 and the adapter 230; also, in another embodiment, the number of the connectors 240 may be two, one connector 240 is provided on the side of the welding portion 2221 facing the body portion 221, and the other connector 240 is provided on the side of the welding portion 2221 facing the adapter 230; and in other embodiments, the side of the welding portion 2221 facing the body portion 221 may also be provided with many connectors 240 stacked in the axial direction of the body portion 221, or the side of the welding portion 2221 facing the adapter 230 may also be provided with a plurality of connectors 240 stacked in the axial direction of the body portion 221.

Exemplarily, the welding position of the adapter 230 with the welding portion 2221 may refer to a position on the adapter 230, such as a weld mark, a weld bead, etc., welded to the welding portion 2221; and the thickness $H_3$ of the welding position of the adapter 230 with the welding portion 2221 may refer to a dimension in the axial direction of the body portion 221 of the welding position of the adapter 230 with the welding portion 2221.

$H_1 + N \times H_2$ may refer to the sum of the thicknesses of the welding portion 2221 and all the connectors 240. $\dfrac{H_1 + N \times H_2}{H_3} \geq 1$, It can be understood that the sum of the thicknesses of the welding portion 2221 and all the connectors 240 is greater than or equal to the thickness H3 of the welding position of the adapter 230 with the welding portion 2221.

By adopting the technical solution of the embodiment, by the design of $\dfrac{H_1 + N \times H_2}{H_3} \geq 1$, the sum of the thicknesses of the welding portion 2221 and all the connector 240 is greater than or equal to thickness H3 of the welding position of the adapter 230 with the welding portion, 2221, so that the sum of the thicknesses of the welding portion 2221 and all the connectors 240 is larger than the thickness of the welding position of the welding portion 2221, and the welding portion 2221 and the connectors 240 are not easily subjected to welded perforation, and in this way, damage to the body portion 221 can be reduced to increase welding quality and the yield of the battery cell 20.

In an embodiment, a value of $\dfrac{H_1 + N \times H_2}{H_3}$ may be, but is not limited to, 0.1, 0.2, 0.3, 0.4, 0.5, 0.6, 0.7, 0.8, 0.9, or 1.

In another embodiment of the present application, as shown in FIGS. 7 and 8, in a case that the connector 240 is welded between the welding portion 2221 and the adapter 230, the thickness H1 of the welding portion 2221 is larger than the thickness H2 of the connector 240.

By adopting the technical solution of the embodiment, when the welding portion 2221 is welded to the adapter 230, since the connector 240 is located between the welding portion 2221 and the adapter 230, welding is performed from the connector 240 to the welding portion 2221 during welding, and the thickness H1 of the welding portion 2221 is larger than the thickness H2 of the connector 240, so that the welding portion 2221 is not easily subjected to welded perforation, reducing a risk of damage to the body portion 221 and facilitating to increase a welding quality and the yield of the battery cell 20.

In another embodiment of the present application, as shown in FIGS. 7 and 8, the thickness of the connector 240 is $H_2$, wherein 0.2 mm $\leq H_2 \leq$ 0.4 mm.

By adopting the technical solution of the embodiment, with the thickness $H_2$ of the connector 240 set within a range of 0.2 mm ~ 0.4 mm, the thickness $H_2$ of the

connector 240 is set appropriately, on one hand, being capable of reducing a risk of damage to the body portion 221 due to welded perforation of the welding portion 2221, and, on the other hand, enabling the connector 240 that does not occupy much space, so as to facilitate to increase the volume energy density of the battery cell 20; by such a design, the thickness $H_2$ of the connector 240 does not easily cause welded perforation of the welding portion 2221 even if the thickness is designed to be too small; and the thickness $H_2$ of the connector 240 does not occupy relatively much space of the battery cell 20 even if the thickness is designed to be too large.

In another embodiment of the present application, as shown in FIGS. 17~20, the adapter 230 is located between the welding portion 2221 and the body portion 221.

By adopting the technical solution of the embodiment, the adapter 230 is located between the welding portion 2221 and the body portion 221, so that welding is performed from the welding portion 2221 to the adapter 230 during welding, and the adapter 230 has a structural strength generally superior to that of the welding portion 2221, so that the adapter 230 is not easily subjected to welded perforation, thereby reducing a risk of damage to the body portion 221 and facilitating to increase a welding quality and the yield of the battery cell 20.

In another embodiment of the present application, as shown in FIGS. 17, 18, and 21, the adapter 230 is provided with a penetrating penetrating hole 231 through which the connection portion 2222 is penetrated.

The penetrating hole 231 may refer to a through hole structure provided in the adapter 230, through which the tab group 222 is penetrated; and in a practical assembly process, the tab group 222, after passing through the penetrating hole 231, is bent at the axis towards the body portion 221 or the axis facing away from the body portion 221.

By adopting the technical solution of the embodiment, after the tab group 222 is passed through the penetrating hole 231 and bent, the welding portion 2221 is located at the side of the adapter 230 facing away from the body portion 221, so that under the action of the adapter 230, the body portion 221 is not easily damaged by welding, facilitating to increase a welding quality and the yield of the battery cell 20.

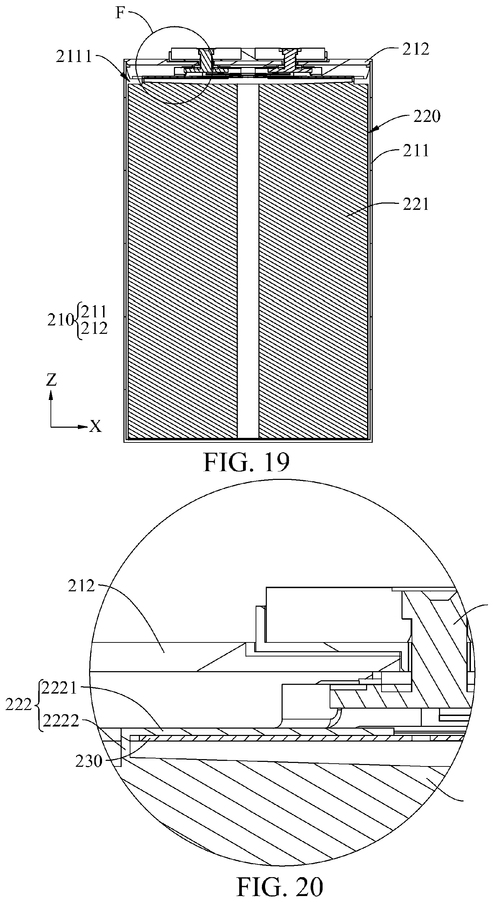

In another embodiment of the present application, as shown in FIGS. 19, 20 and 21, in the case that the end of the welding portion 2221 facing away from the connection portion 2222 is located at the side of the connection portion 2222 close to the inner turn of the electrode plate 224, the connection portion 2222 is located at the side of the adapter 230 close to the outer turn of the electrode plate 223.

During assembling, the adapter 230 is disposed at the side of the tab group 222 close to the inner turn of the tab 224, and then the tab group 222 is bent toward the axis of the body portion 221; and after bending, the welding portion 2221 is located at the side of the adapter 230 facing away from the body portion 221, the connection portion 2222 is located at the side of the adapter 230 close to the outer turn of the electrode plate 223, and the end of the welding portion 2221 facing away from the connection portion 2222 is located at the side of the connection portion 2222 close to the inner turn of the tab 224.

By adopting the technical solution of the embodiment, the tab group 222 directly passes through the side of the adapter 230 close to the outer turn of the electrode plate 223 and then bends, so that the welding portion 2221 can be located at the side of the adapter 230 facing away from the body portion 221, without a penetrating structure provided in the adapter 230 to facilitate manufacturing.

In another embodiment of the present application, as shown in FIGS. 19, 20 and 21, a notch 232 is provided in a side of the adapter 230 close to the outer turn of the electrode plate 223, and the connection portion 2222 is located in the notch 232.

The notch 232 may refer to a structure of the notch 232 for avoidance or accommodation of the connection portion 2222. The notch 232 may have various shapes, such as a U-shape or the like; and exemplarily, the notch 232 may be formed by linearly removing a part of a material at the periphery of the adapter 230, such a design enabling a simple, convenient manufacturing.

By adopting the technical solution of the embodiment, the notch 232 can provide installation space for the connection portion 2222, the connection portion 2222 does not easily protrude out of the outer peripheral wall of the body portion 221, a certain distance can also be kept between the connection portion 2222 and the inner wall of the housing 210, so that a risk of pressing the connection portion 2222 and the inner wall of the housing 210 is reduced, facilitating to increase use reliability of the battery cell 20, and overall structure compactness is excellent, facilitating to increase the energy density of the battery cell 20.

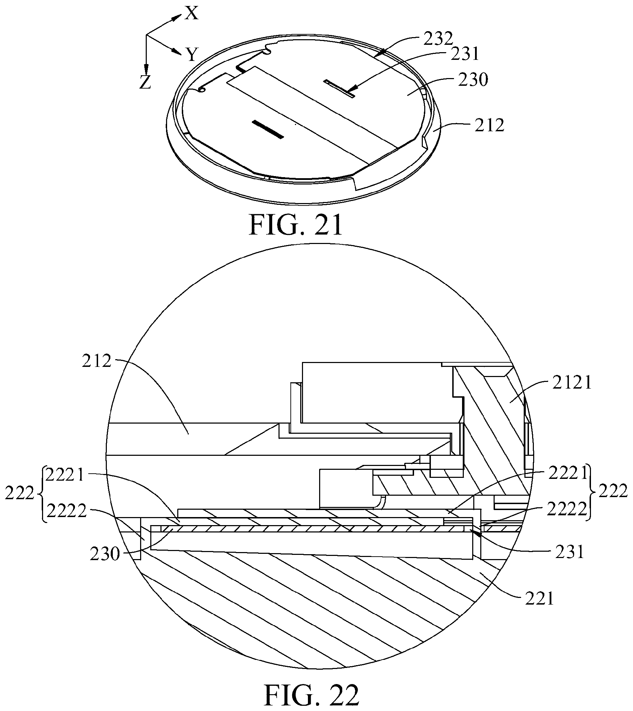

In another embodiment of the present application, as shown in FIGS. 22 ~ 24, a battery cell 20 includes a plurality of tab groups 222, a part of the tab groups 222 have welding portions 2221 located between the body portion 221 and the adapter 230; and another part of the tab groups 222 have welding portions 2221 located at the side of the adapter 230 facing away from the body portion 221.

By adopting the technical solution of the embodiment, the tabs 224 of the electrode assembly 220 are divided into a plurality of tab groups 222, so that the number of tabs 224 in each tab group 222 can be designed to be small to facilitate bending; and further the positions of the welding portions 2221 of the tab groups 222 can be flexibly set, thereby facilitating assembly.

In an embodiment, the adapter 230 includes a reversing portion 233 and a fixing portion 234 connected to each other, and the reversing portion 233 is welded to the welding portion 2221, and can be reversed with respect to the fixing portion 234.

For example, as shown in FIG. 25, the reversing portion 233 may refer to a portion of the adapter 230 welded to the welding portion 2221, the fixing portion 234 may refer to a portion of the adapter 230 other than the reversing portion 233, the fixing portion 234 and reversing portion 233 have a boundary which is the dotted line in FIG. 5, the reversing portion 233 may be bent upward along the dotted line with respect to the fixing portion 234, so that the reversing portion 233 may be bent by reversing it upward before the tab group 222 is bent, enabling a certain angle between the fixing portion 234 and the reversing region, at this point, the welding portion 2221 and the reversing portion 233 may be welded together by the welding laser in the radial direction of the body portion 221, in such a way, the body portion 221 is not damaged due to projection of the welding laser onto the welding portion 2221 even if the welding portion 221 is subjected to welding penetrating by the welding laser, reducing a risk of damage to the body portion 221; and after welding is completed, the reversing portion 233 and the tab group 222 are reversed and bent, so that the welding portion 2221 and the reversing portion 233 are stacked in the axial direction of the body portion 221, and finally, the electrode assembly 220 and adapter 230 after the welding, after their fixing is completed, are enclosed within the housing 210. Here, the fixing portion 234 and the reversing portion 233 are integrated components, and that is achieved by the material of the adapter 230 itself having bending performance, by the material of the reversing portion 233 itself having bending performance after the fixing portion 234 and reversing portion 233 are fixedly connected, or by a rotating structure for the connection between the reversing portion 234 and the reversing portion 233; wherein the rotating structure may be a rotating shaft structure, a hinge structure, or an easily bendable component (for example, a copper plate, an aluminum plate, etc.), etc. However, an adapter 230 may be provided with many reversing portions 233, and the reversing portions 233 are welded to the tab groups 222 in a one to-one corresponding way. Further, in another embodiment, one reversing portion 233 may be welded to a plurality of tab groups 222.

By adopting the design solution of the embodiment, a welding direction of a welding laser may be changed, thereby reducing a risk of damage to the body portion 221 because the welding laser is not projected to the body portion 221 with welded perforation of the welding portion 221 by the laser, to increase the performance of the cell of the battery 1100. The structure of the battery cell 20 is described below with reference to some specific examples.

Specific example 1

In the specific example, as shown in FIGS. 4 ~ 10, the battery cell 20 includes a case 211, an electrode assembly 220 and an adapter 230, the electrode assembly 220 and the adapter 230 are disposed in a mounting cavity 2111 of a housing 210, the electrode assembly 220 includes a body portion 221 and a tab group 222, the body portion 221 is a cylindrical structure formed by winding an electrode plate 223, tab 224 are led out of at least two turns of the electrode plate 223 from an end face of the body portion 221, a plurality of tabs 224 led out of the electrode plate 223 that are arranged in a radial direction of the body portion 221 form a tab group 222; the tab group 222 is bent toward an end of the body portion 224, the tab 224 in the tab group 222 is bent to form a welding section 2241 and a connection section 2243, and the connection section 2243 is connected between the body portion 221 and the welding section 2241, and is curved; the welding sections 2241 of the plurality of tabs 224 in the tab group 222 are stacked in the axial direction of the body portion 221 and form a welding portion 2221, and the connection sections 2243 of the plurality of tabs 224 in the tab group 222 are stacked in the radial direction of the body portion 221 and form a connection portion 2222; the adapter 230 and the welding portion 2221 are stacked in the axial direction of the body portion 221 and are welded; the end of the welding portion 2221 facing away from the connection portion 2222 is provided with a pre-welding structure to connect the tabs 224 stably, facilitating to form a compact welding portion 2221 to increase a welding quality; and the welding portion 2221 is disposed between the body portion 221 and the adapter 230, and a connector 240 is welded between the adapter 230 and the welding portion 2221 to increase a welding thickness, reducing a risk of welded perforation, so as to reduce weld defects and increase a weld quality.

Specific example 2

In the specific example, as shown in FIGS. 11 and 12, the specific example differs from the specific example 1 in: the length $L_1$ of the connection section 2243 is smaller than the length $L_7$ of the welding section 2241 to facilitate bending of the tab 224.

Specific example 3

In the specific example, as shown in FIG. 13 and FIG. 14, the specific example differs from the specific example 1 in: a plurality of tab groups 222 are led out of an electrode assembly 220, and are arranged at intervals in a radial direction of a body portion 221, and a spacing between two adjacent tab groups 222 get larger in a first direction which is a direction which points to an outer turn of the electrode plate 223 from an inner turn of an electrode plate 223. The tabs 224 are divided into a plurality of groups, so that the number of the tabs 224 in each of the tab groups 222 can be set to be relatively small to facilitate bending of the tab groups 222, and further, suitable position arranging for the plurality of tab groups 222 can balance the current flowing areas of the inner turn and outer turn of the electrode plates 224, to increase the performance of the battery cell 20.

Specific example 4

In the specific example, as shown in FIG. 15, the specific example differs from the specific example 1 in: a tab group 222 is divided into a plurality of sections in the width direction of the tab 224, two adjacent sections are completely disconnected, the welding section 2241 of the tab 224 is divided into a plurality of completely disconnected welding segments 2242, the connection section 2243 of the tab 224 is divided into a plurality of completely disconnected connection segments 2244, the welding segments 2242 are connected to the connection segments 2244 in a one to-one corresponding way, a gap between two adjacent welding segments 2242 forms an openwork structure 2245, and a gap between two adjacent connection segments 2244 forms an openwork structure 2245, and such a mutile-section structure can promote bending of the tab group 222.

Specific example 5

In the specific example, as shown in FIG. 16, the specific example differs from the specific example 1 in: a connector 240 is located between a welding portion 2221 and a body portion 221, on one hand, the provision of the connector 240 increases a welding thickness to reduce a risk of damaging a body portion 221 by welded perforation; and on the other hand, the structural strength of the connector 240 is generally superior to that of the welding portion 2221, so that it is not likely to damage the body portion 221 since the connector 240 is not easily subjected to welded perforation during welding, facilitating to increase a welding quality and the yield of the battery cell 20.

Specific example 6

In specific example, as shown in FIG. 17, FIG. 18 and FIG. 21, the specific example differs from the specific example 1 in: a battery cell 20 does not include a connector 240, an adapter 230 is provided with a penetrating hole 231, and a tab group 222 is bent toward an outer turn of an electrode plate 223 after passing through the penetrating hole 231; and after bending, a welding portion 2221 is located at the side of the adapter 230 facing away from a body portion 221, a connection portion 2222 is penetrated into the penetrating hole 231, and the structural strength of the adapter 230 is generally better than that of the welding portion 2221, so that the connector 240 is less likely to be subjected to welded perforation during welding to damage the body portion 221, facilitating to increase a welding quality and the yield of the battery cell 20.

Specific example 7

In the specific example, as shown in FIG. 19, FIG. 20 and FIG. 21, the specific example differs from the specific example 6 in: an adapter 230 is provided with a notch 232 close to an outer turn of an electrode plate 223, and a tab group 222 is bent toward an inner turn of an electrode plate 223 after passing through the notch 232; and after bending, a welding portion 2221 is located at the side of the adapter 230 facing away from a body portion 221, and a connection portion 2222 is penetrated in the notch 232.

Specific example 8

In the specific example, as shown in FIG. 22, the specific example differs from the specific example 6 in: two tab groups 222 are led out of an electrode assembly 220, an adapter 230 is provided with a notch 232 and a penetrating hole 231, one of the tab groups 222 is bent toward an inner turn of an electrode plate 223 after passing through the notch 232, and after bending, the welding portion 2221 of the tab group 222 is located at the side of the adapter 230 facing away from the body portion 221, and the connection portion 2222 of the tab group 222 is penetrated into the notch 232. The other tab group 222 is bent toward an outer turn of the electrode plate 223 after passing through the penetrating hole 231; and the welding portion 2221 of the tab group 222 is located at the side of the adapter 230 facing away from the body portion 221 after bending, and the connection portion 2222 of the tab group 222 is penetrated into the penetrating hole 231.

Specific example 9

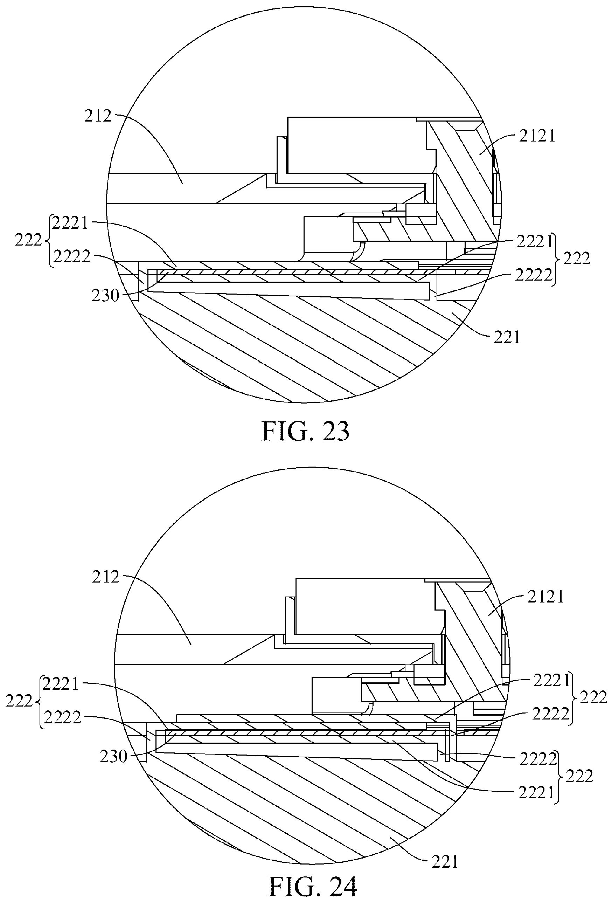

In the specific example, as shown in FIG. 23, the specific example differs from the specific example 8 in: an adapter 230 is provided with a notch 232, one of the tab groups 222 is bent toward an inner turn of an electrode plate 223 after passing through the notch 232, the welding portion 2221 of the tab group 222 is located at the side of the adapter 230 facing away from the body portion 221 after bending, and the connection portion 2222 of the tab group 222 is penetrated in the notch 232. The other tab group 222 is located between the adapter 230 and the body portion 221, and the tab group 222 is bent toward an outer turn of the electrode plate 223; and the welding portion 2221 of the tab group 222 is located between the adapter 230 and the body portion 221 after bending.

Specific example 10

In the specific example, as shown in FIG. 23, the specific example differs from the specific example 8 in: a tab group 222 is further led out of an electrode assembly 220, and the tab group 222 is located between an adapter 230 and a body portion 221, and bent toward an outer turn of an electrode plate 223; and a welding portion 2221 of the tab group 222 is positioned between the adapter 230 and the body portion 221 after bending.

In another embodiment of the present application, as shown in FIGS. 4 ~ 10, a method for preparing a battery cell is provided, for preparing the battery cell in the embodiments as described above, the method including the following steps:

    bending a tab group 224 of an electrode assembly 220 towards an end of a body portion 221 of the electrode assembly 220, wherein the body portion 221 is a cylindrical structure formed by winding an electrode plate 223, tabs 224 are led out of at least two turns of the electrode plate 223 from an end face of the body portion 221, and a plurality of tabs 224 led out of the electrode plate 223 that are arranged in a radial direction of the body portion 221 form a tab group 222; the tab 224 in the tab group 222 is bent to form a welding section 2241 and a connection section 2243, welding sections 2241 of a plurality of tabs 224 are stacked in an axial direction of the body portion 221 and form a welding section 2221, and connection sections 2243 of a plurality of tabs 224 are stacked in a radial direction of the body portion 221 and form a connection section 2222;

    welding the adapter 230 to the welding portion 2221, the adapter 230 and welding portion 2221 being stacked in the axial direction of the body portion 221; and

    enclosing the completed adapter 230 and the electrode assembly 220 into the mounting cavity 2111 of the housing 210 after welding is completed.

In the method for preparing the battery cell 20 according to the embodiment of the present application, after the tab group 222 is bent to form the welding portion 2221 and the connection portion 2222, the welding portion 2221 and the adapter 230 are welded together, and finally the electrode assembly 220 and the adapter 230 after welding is completed are enclosed in the mounting cavity 2111 of the housing 210; and in this process, the welding portion 2221 formed after the tab group 222 is bent and the welding sections 2241 within the welding portion 2221 can smoothly and closely abut against each other to form a tight welding portion 2221, thereby reducing the problem that poor welding occurs for the welding portion 2221 and adapter 230, to facilitate to increase the performance of the battery cell 20.

In another embodiment of the present application, as shown in FIGS. 9 and 10, before the tab group 222 is bent, the tab group 222 is furled in a stacking direction of the welding section 2241.

Before the tab group 222 is not bent, as shown in FIG. 9, the stacking direction of the welding section 2241 may refer to the radial direction of the body portion 221.

By adopting the technical solution of the embodiment, pressing and furling can enable the welding sections 2241 obtained by bending can more closely abut against each other to form a more tight welding portion 2221, reducing risks of welding defects such as insufficient welding, welded perforation, etc., and further facilitating to increase a welding quality for the adapter 230 and tab 224.

In another embodiment of the present application, as shown in FIGS. 11 and 12, after the tabs 224 are furled and before the tabs 224 are bent, the tab group 222 is pre-welded, so that the tabs 224 in the tab group 222 are welded together.

By adopting the technical solution of the embodiment, after the tabs 224 are furled and before the tabs 224 are bent, the tabs 224 in the tab group 222 are welded together by pre-welding, so that a risk of a loose tab 224 during subsequent bending can be reduced, and the welding sections 2241 in the welding portion 2221 then can abut against each other to form a tight welding portion 2221, reducing risks of poor welding such as insufficient welding, welded perforation, etc., to facilitate to increase the welding quality for the welding portion 2221 and adapter 230.

In another embodiment of the present application, as shown in FIGS. 9 and 10, a pre-welded tab group 222 faces away from the end of the body portion 221.

By adopting the technical solution of the embodiment, pre-welding is performed at the end of the tab group 222 facing away from the body portion 221, and the end of the tab group 222 close to the body portion 221 is in a free state after the welding is completed, facilitating bending of the tab group 222.

In another embodiment of the present application, as shown in FIG. 2, provided is a battery 1100 including the battery cell 20 in the embodiment as described above, and/or a battery cell 20 obtained by using the method for preparing a battery cell 20 in the embodiments as described above.

In another embodiment of the present application, as shown in FIG. 1, provided is an electric device including the battery 1100 in the embodiment as described above.

The above descriptions of the various embodiments tend to emphasize differences between the various embodiments. For same or similar parts thereof, refer to these embodiments. For brevity, details are not described herein again.

Finally, it should be noted that the above embodiments are only for the purpose of illustrating the technical solutions of the present application and are not to be construed as limiting the present application. Although the present application has been described in detail with reference to the above embodiments, it should be understood by a person of ordinary skill in the art that modifications may be made to the technical solutions described in the above embodiments, or equivalent replacement may be made to some or all of the technical features thereof. However, the modifications or replacements do not make the nature of corresponding technical solutions depart from the scope of the technical solutions of the embodiments of the present application, all of which shall fall within the scope of the claims and the description of the present application. In particular, the technical features mentioned in the embodiments may be combined in any manner provided that there is no structural conflict. The present application is not limited to the specific embodiments disclosed herein, but includes all technical solutions falling within the scope of the claims.

## Claims

1.  A battery cell, comprising:

    a housing having a mounting cavity;
    an electrode assembly located in the mounting cavity, the electrode assembly comprising a body portion and a tab group, the body portion being a cylindrical structure formed by winding an electrode plate, tabs being led out of at least two turns of the electrode plate from an end face of the body portion, and a plurality of tabs led out of the electrode plate that are arranged in a radial direction of the body portion forming the tab group; the tab group being bent toward an end of the body portion, the tabs in the tab group being bent to form welding sections and connection sections, the connection sections being connected between the body portion and the welding sections, and the connection sections being curved; the welding sections of the plurality of tabs in the tab group being stacked in an axial direction of the body portion to form a welding portion, and the connection sections of the plurality of tabs in the tab group being stacked in a radial direction of the body portion to form a connection portion; and
    an adapter stacked along with the welding portion in the axial direction of the body portion, the adapter being welded to the welding portion.

2.  The battery cell according to claim 1, wherein a length of the connection section is $L_1$, and a radius of a corresponding turn, connected to the connection section, of the electrode plate is R, wherein

$$\frac{L_1}{R} \leq 3.14 \ .$$

3.  The battery cell according to claim 2, wherein

$$\frac{L_1}{R} \leq 1.57 \ .$$

4.  The battery cell according to any one of claims 1 ~ 3, wherein a length of the connection section in at least one of the tabs is smaller than that of the welding section.

5. The battery cell according to any one of claims 1 ~ 4, wherein the tab group is provided with a pre-welding structure for connecting the plurality of tabs in the tab group.

6. The battery cell according to claim 5, wherein the pre-welding structure is provided at the welding portion.

7. The battery cell according to claim 6, wherein a spacing between the pre-welding structure and the connection portion is $L_2$, wherein $0.1mm \leq L_2 \leq 10mm$.

8. The battery cell according to claim 6, wherein $0.5mm \leq L_2 \leq 10mm$.

9. The battery cell according to any one of claims 5 ~ 8, wherein the pre-welding structure is located at an end of the welding portion facing away from the connection section.

10. The battery cell according to claim 9, wherein a length of the welding portion is $L_3$, and a length of the pre-welding structure is $L_4$ in a longitudinal direction of the welding portion, wherein $0.2 \leq \dfrac{L_4}{L_3} < 1$.

11. The battery cell according to any one of claims 1 ~ 10, wherein a total number of turns of the electrode plate is $N_1$, and a total number of turns of the electrode plate to which the tab is connected is $N_2$, wherein $0.1 \leq \dfrac{N_2}{N_1} \leq 0.9$.

12. The battery cell according to claim 11, wherein $0.3 \leq \dfrac{N_2}{N_1} \leq 0.7$.

13. The battery cell according to any one of claims 1 ~ 12, wherein the tabs are led out of the electrode plate from an end surface of the body portion at intervals and form the plurality of tab groups, and the connection portions of the plurality of tab groups are provided at intervals in the radial direction of the body portion.

14. The battery cell according to claim 13, wherein the number of the tabs, in the tab group, close to an inner turn of the electrode plate is $N_3$, and the number of the tabs, in the tab group, close to an outer turn of the electrode plate is $N_4$, where $N_3 > N_4$.

15. The battery cell according to claim 14, wherein the number of the tabs in the plurality of tab groups gradually decreases in a first direction which is a direction in which the inner turn of the electrode plate points to the outer turn of the electrode plate.

16. The battery cell according to any one of claims 13 ~ 15, wherein a spacing between connection portions of two adjacent tab groups close to the inner turn of the electrode plate is $L_5$, and a spacing between connection portions of two adjacent tab groups close to an outer turn of the electrode plate is $L_6$, where $L_6 > L_5$.

17. The battery cell according to claim 16, wherein the spacing between the connection portions of the two adjacent tab groups gradually decreases in a first direction which is a direction in which an inner turn of the electrode plate points to an outer turn of the electrode plate.

18. The battery cell according to any one of claims 1~17, wherein the electrode assembly comprises the plurality of tab groups provided at intervals in a circumferential direction of the body portion.

19. The battery cell according to any one of claims 1 ~18, wherein at least one of the welding section and the connection section is provided with an openwork structure.

20. The battery cell according to claim 19, wherein in the case that the welding section is provided with the openwork structure, the welding section comprises a plurality of welding segments connected to the connection section, the plurality of welding segments are arranged at intervals in a length direction of the connection section, and a gap between two adjacent welding segments forms the openwork structure; and
in the case that the connection section is provided with the openwork structure, the connection section comprises a plurality of connection segments connected to the welding section, the plurality of connection segments are arranged at intervals in the circumferential direction of the body portion, and a gap between two adjacent connection segments forms the openwork structure.

21. The battery cell according to claim 20, wherein in the case that both the welding section and the connection section are provided with the openwork structure, the plurality of welding segments and the plurality of connection segments are connected in a one-to-one corresponding way.

22. The battery cell according to any one of claims 1~21, wherein an end of the welding portion facing away from the connection portion is located at a side of the connection portion facing the inner turn of the tab; or an end of the welding portion facing away from the connection portion is located at a side of the connection portion facing away from the inner turn of the tab.

23. The battery cell according to any one of claims 1~22, wherein the welding portion is located between the body portion and the adapter.

24. The battery cell according to claim 23, wherein the battery cell further includes a connector, the connector is welded between the welding portion and the adapter; and/or the welding portion is welded between the connector and the adapter.

25. The battery cell according to claim 24, wherein a thickness of the welding portion is $H_1$, a thickness of the connector is $H_2$, a number of the connector is N, and a thickness of a welding position of the adapter with the welding portion is $H_3$, wherein

$$\frac{H_1 + N \times H_2}{H_3} \geq 1 \ .$$

26. The battery cell according to claim 24 or 25, wherein in a case that the connector is welded between the welding portion and the adapter, a thickness of the welding portion is larger than that of the connector.

27. The battery cell according to any one of claims 23~26, wherein the thickness of the connector is $H_2$, where $0.2mm \leq H_2 \leq 0.4mm$.

28. The battery cell according to any one of claims 1~22, wherein the adapter is located between the welding portion and the body portion.

29. The battery cell according to claim 28, wherein the adapter is provided with a penetrating hole into which the connection portion is penetrated.

30. The battery cell according to claim 28, wherein the connection portion is located at a side of the adapter close to the outer turn of the electrode plate in a case that an end of the welding portion facing away from the connection portion is located at a side of the connection portion close to the inner turn of the tab.

31. The battery cell according to claim 30, wherein a side of the adapter close to the outer turn of the electrode plate is provided with a notch within which the connection portion is located.

32. The battery cell according to any one of claims 1~31, wherein the battery cell comprises the plurality of tab groups, the welding portions of a part of the tab groups are located between the body portion and the adapter, and the welding portions of the other part of the tab group are located at a side of the adapter facing away from the body portion.

33. The battery cell according to any one of claims 1~32, wherein the adapter comprises a reversing portion and a fixing portion connected to each other, and the reversing portion is welded to the welding portion, and is capable of being reversed with respect to the fixing portion.

34. A method for preparing a battery cell, wherein the method is used to prepare the battery cell according to any one of claims 1~33, the method comprising the following steps:

bending the tab group of the electrode assembly towards the end of the body portion of the electrode assembly, wherein the body portion is a cylindrical structure formed by winding an electrode plate, tabs are led out of at least two turns of the electrode plate from an end face of the body portion, and a plurality of tabs lead out of the electrode plate that are arranged in a radial direction of the body portion form the tab group; the tabs in the tab group are bent to form the welding sections and the connection sections, the welding sections of the plurality of tabs are stacked in the axial direction of the body portion and form a welding portion, and the connection sections of the plurality of tabs are stacked in the radial direction of the body portion and form the connection portion;
welding the adapter to the welding portion, the adapter and the welding portion being stacked in the axial direction of the body portion; and enclosing the adapter and the electrode assembly into the mounting cavity of the housing after welding is completed.

35. The method for preparing a battery cell according to claim 34, wherein the tab group is furled in a stacking direction of the welding section before the tab group is bent.

36. The method for preparing a battery cell according to claim 35, wherein the tab group is pre-welded after the tabs are furled and before the tabs are bent, so that the tabs in the tab group are welded together.

37. The method for preparing a battery cell according to claim 36, wherein an end of the tab group facing away from the body portion is pre-welded.

38. A battery, comprising the battery cell according to any one of claims 1-3 3 or a battery cell obtained by the method for preparing a battery cell according to claim 37.

**39.** An electric device, comprising the battery according to claim 38.

1000

FIG. 1

1100

FIG. 2

<u>20</u>

210
250
220
226
226
2231 } 223
2232

FIG. 3

FIG. 4

FIG. 5

FIG. 6

FIG. 7

FIG. 8

FIG. 9

225

224

$L_3$

$L_4$

## FIG. 10

220

222

$L_2$

224 { 2241
2243

$L_1$

221

Z

Y X

## FIG. 11

FIG. 12

220

A

2221 } 222
2222

221

Z
Y ← ↑ → X

M

A

FIG. 13

FIG. 14

**FIG. 15**

FIG. 16

FIG. 17

FIG. 18

FIG. 19

FIG. 20

FIG. 21

FIG. 22

FIG. 23

FIG. 24

FIG. 25

## INTERNATIONAL SEARCH REPORT

| International application No. |
| --- |
| **PCT/CN2023/132450** |

| A. | CLASSIFICATION OF SUBJECT MATTER |
| --- | --- |

H01M50/528(2021.01)i; H01M10/0587(2010.01)i

According to International Patent Classification (IPC) or to both national classification and IPC

| B. | FIELDS SEARCHED |
| --- | --- |

Minimum documentation searched (classification system followed by classification symbols)

IPC:H01M

Documentation searched other than minimum documentation to the extent that such documents are included in the fields searched

Electronic data base consulted during the international search (name of data base and, where practicable, search terms used)

VEN, CNABS, CNTXT, WOTXT, EPTXT, USTXT, CNKI, IEEE: 电池, 极耳, 组, 弯, 折, 连接, 焊, 转接, cell, battery, tab, group, bend, bent, curve, connect+, weld+, adapter

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | CN 113437444 A (POWERAMP TECHNOLOGY LTD.) 24 September 2021 (2021-09-24) description, paragraphs 5-103, and figures 1-9 | 1-39 |
| X | CN 216698661 U (NINGDE CONTEMPORARY AMPEREX TECHNOLOGY CO., LTD.) 07 June 2022 (2022-06-07) description, paragraphs 5-112, and figures 1-15 | 1-39 |
| X | CN 113437443 A (POWERAMP TECHNOLOGY LTD.) 24 September 2021 (2021-09-24) description, paragraphs 6-122, and figures 1-12 | 1-39 |
| X | WO 2023092440 A1 (NINGDE CONTEMPORARY AMPEREX TECHNOLOGY CO., LTD.) 01 June 2023 (2023-06-01) description, paragraphs 4-145, and figures 1-12 | 1-39 |
| X | CN 115863931 A (NINGDE CONTEMPORARY AMPEREX TECHNOLOGY CO., LTD.) 28 March 2023 (2023-03-28) description, paragraphs 3-135, and figures 1-8 | 1-39 |
| X | CN 218939956 U (NINGDE CONTEMPORARY AMPEREX TECHNOLOGY CO., LTD.) 28 April 2023 (2023-04-28) description, paragraphs 5-166, and figures 1-14 | 1-39 |

☑ Further documents are listed in the continuation of Box C. ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **26 January 2024** | **29 February 2024** |

| Name and mailing address of the ISA/CN | Authorized officer |
| --- | --- |
| **China National Intellectual Property Administration (ISA/ CN) China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
|---|
| **PCT/CN2023/132450** |

| C. | DOCUMENTS CONSIDERED TO BE RELEVANT | |
|---|---|---|
| Category* | Citation of document, with indication, where appropriate, of the relevant passages | Relevant to claim No. |
| X | CN 219017865 U (LINKDATA NEW ENERGY CO., LTD.) 12 May 2023 (2023-05-12) description, paragraphs 3-41, and figures 1-6 | 1-39 |
| X | WO 2020103014 A1 (SHENZHEN MALI ENERGY TECHNOLOGY CO., LTD.) 28 May 2020 (2020-05-28) description, page 3 line 16-page 10 line 20, and figures 1-5 | 1-39 |
| A | CN 115064843 A (NINGDE AMPEREX TECHNOLOGY LTD.) 16 September 2022 (2022-09-16) entire document | 1-39 |
| A | CN 218004909 U (BYD CO., LTD.) 09 December 2022 (2022-12-09) entire document | 1-39 |

Form PCT/ISA/210 (second sheet) (July 2022)

## INTERNATIONAL SEARCH REPORT
### Information on patent family members

International application No.

**PCT/CN2023/132450**

| Patent document cited in search report | | | Publication date (day/month/year) | Patent family member(s) | | | Publication date (day/month/year) |
|---|---|---|---|---|---|---|---|
| CN | 113437444 | A | 24 September 2021 | None | | | |
| CN | 216698661 | U | 07 June 2022 | EP | 3926753 | A1 | 22 December 2021 |
| | | | | EP | 3926753 | A4 | 22 June 2022 |
| | | | | EP | 3926753 | B1 | 12 July 2023 |
| | | | | US | 2022123444 | A1 | 21 April 2022 |
| | | | | WO | 2021027492 | A1 | 18 February 2021 |
| CN | 113437443 | A | 24 September 2021 | None | | | |
| WO | 2023092440 | A1 | 01 June 2023 | EP | 4277007 | A1 | 15 November 2023 |
| | | | | US | 2023395869 | A1 | 07 December 2023 |
| CN | 115863931 | A | 28 March 2023 | None | | | |
| CN | 218939956 | U | 28 April 2023 | None | | | |
| CN | 219017865 | U | 12 May 2023 | None | | | |
| WO | 2020103014 | A1 | 28 May 2020 | CN | 112913076 | A | 04 June 2021 |
| CN | 115064843 | A | 16 September 2022 | None | | | |
| CN | 218004909 | U | 09 December 2022 | None | | | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310791898